# EUROPEAN PATENT APPLICATION

(11) **EP 4 307 490 A1**
(43) Date of publication of application: **17.01.2024**
(21) Application number: 21944913.9
(22) Date of filing: 20.12.2021
(51) Int. Cl.: H01R 13/629, H01R 13/639, H01R 13/642, H01R 13/44, H01R 13/40, G02B 6/38

(54) **CONNECTOR, ADAPTER, CONNECTOR ASSEMBLY, AND COMMUNICATION DEVICE**

(30) Priority: 08.06.2021 CN 202110639209
(71) Applicant: Huawei Technologies Co., Ltd., Shenzhen, Guangdong 518129 (CN)
(72) Inventor: JIN, Zhu, Shenzhen, Guangdong 518129 (CN); CHEN, Yangquan, Shenzhen, Guangdong 518129 (CN); LIU, Shenghao, Shenzhen, Guangdong 518129 (CN)
(74) Representative: Gill Jennings & Every LLP
(86) International application number: PCT/CN2021/139724
(87) International publication number: WO 2022/257417

(57) **Abstract**

Embodiments of the present invention provide a connector, an adapter, a connector assembly, and a communications device. The adapter includes a housing and a first buckle. A first accommodating space is disposed in the housing, the first accommodating space forms an opening on the housing, a first groove is disposed on the housing, and the first accommodating space is configured to accommodate a first outer housing of the connector from the opening. The first buckle is disposed in the first accommodating space and fastened to the housing, the first buckle includes a first protrusion and a second protrusion, and the first protrusion is configured to cooperate with a first slot on the first outer housing to fasten the adapter and the connector. The first groove is configured to provide a movable space for the second protrusion, and the second protrusion is configured to move in the first groove under an external force and drive the first protrusion away from the first slot. The connector and the adapter can be easily unlocked by using embodiments of the present invention.

## Description

This application claims priority to Chinese Patent Application No. 202110639209.2, filed with the China National Intellectual Property Administration on June 8, 2021 and entitled " a connector, an adapter, a connector assembly, and a communications device", which is incorporated herein by reference in its entirety.

### TECHNICAL FIELD

The present invention relates to the field of optical communications technologies, and in particular, to a connector, an adapter, a connector assembly, and a communications device.

### BACKGROUND

With development of communications technologies, fiber transmission is increasingly used in communications systems. An FTTR (Fiber to the room, fiber to the room) is an important part to implement a high-quality network in a drop phase and help develop cloud (Cloud), VR (Virtual Reality, virtual reality), the Internet of Things, and the like. In an FTTR network, in the drop phase, fibers led out from an equipment room and drop fibers are interconnected in a fiber management tray to deploy the optical network to every household. Currently, all network devices have power supply requirements. Therefore, one fiber is required for communication and one power cable is required for power supply between a fiber and a specific corresponding device. As a result, one device requires two cables for implementing different functions. Application of photoelectric hybrid cables and photoelectric hybrid connectors optimizes a quantity of device ports and improves operation convenience. With population density of cities, a quantity of ports of each fiber management tray increases. How to arrange more fiber connection ports in a limited space is a research and development direction in the industry. For each fiber connector plug, how to simplify a structure to implement a miniaturization design solution is a research and development direction in the industry.

### SUMMARY

Embodiments of the present invention disclose a connector, an adapter, a connector assembly, and a communications device, to improve convenience of unlocking a connector and an adapter.

According to a first aspect, an embodiment of this application provides an adapter. The adapter includes a housing and a first buckle, where
a first accommodating space is disposed in the housing, the first accommodating space forms an opening on the housing, a first groove is disposed on the housing, and the first accommodating space is configured to accommodate a first outer housing of a connector from the opening; the first buckle is disposed in the first accommodating space and fastened to the housing, the first buckle includes a first protrusion and a second protrusion, and the first protrusion is configured to cooperate with a first slot on the first outer housing to fasten the adapter and the connector; and the first groove is configured to provide a movable space for the second protrusion, and the second protrusion is configured to move in the first groove under an external force and drive the first protrusion away from the first slot.

It can be learned that a component for unlocking the connector and the adapter is disposed on the adapter, and based on a design of the first groove and the second protrusion on the adapter, the first protrusion can be detached from the first slot by pushing an operating handle, thereby unlocking the connector and the adapter. This unlocking mode is easy to operate and has high unlocking efficiency.

With reference to the first aspect, in a possible implementation of the first aspect, the first buckle is fastened to the housing by using an elastic support, one end of the elastic support is fastened to the housing, and the other end of the elastic support is fastened to the first buckle. It may be understood that, because the first buckle is fastened to the housing by using the elastic support, after a force is applied to the first buckle and conveyed to the elastic support, an elastic deformation occurs on the elastic support, thereby driving the first protrusion away from the first groove. Optionally, the first buckle and the elastic support are an integrally formed structure. Alternatively, the first buckle and the elastic support are structural members independent of each other, and the first buckle and the elastic support are fixedly connected by means of buckle-slot cooperation, or fixedly connected by means of adhesive bonding.

With reference to the first aspect, in another possible implementation of the first aspect, the second protrusion includes a slope, the slope is inclined with respect to an axial direction of the adapter, the slope is configured to cooperate with the operating handle, the slope is configured to convert an axial force of the operating handle on the slope into a radial force, and the radial force is used to drive the first buckle to move away from the first slot. It may be understood that, by designing the slope on the second protrusion, the force of the operating handle can be conveyed as a force away from the first slot, so that the first protrusion is detached from the first slot.

With reference to the first aspect, in another possible implementation of the first aspect, the operating handle is movably connected to the housing. It may be understood that when the operating handle is disposed on the housing, unlocking is more quick and convenient.

With reference to the first aspect, in another possible implementation of the first aspect, the adapter further includes a first spring, the first spring is elastically connected between the housing and the operating handle, the operating handle moves relative to the housing and compresses the first spring in a process of unlocking the connector and the adapter, and after unlocking, the operating handle springs back to an original position under an elastic holding force of the first spring. It may be understood that, by designing the first spring, the operating handle can be quickly sprung back to the original position after unlocking. This helps fasten the adapter and the connector again.

With reference to the first aspect, in another possible implementation of the first aspect, in the adapter, an area that matches a profile of the connector is a non-centrosymmetric structure, and the non-centrosymmetric structure is used to provide a guide in a process of plugging the connector into the adapter. It may be understood that, by designing a shape of the first accommodating space of the adapter and designing the profile of the connector, for example, designing an asymmetric structure with a central axis as a center, in the process of plugging the connector into the adapter, the connector can be plugged into the adapter only in a determined direction. Therefore, a foolproof structure can be implemented.

With reference to the first aspect, in another possible implementation of the first aspect, the adapter is a photoelectric adapter, the connector is a photoelectric connector, and the photoelectric adapter further includes a first electrical assembly, where a first end of the first electrical assembly is located in the first accommodating space, and is configured to electrically connect to a second electrical assembly in the first outer housing of the photoelectric connector; and a second end of the first electrical assembly is located on an outer surface of the photoelectric adapter, and is configured to electrically connect to an integrated circuit board. It may be understood that, because the first electrical assembly is integrated on the adapter, adaptation to the electrical assembly on the connector can be implemented.

With reference to the first aspect, in another possible implementation of the first aspect, the first electrical assembly includes a first conducting element and a second conducting element; one end of the first conducting element, being a part of the first end, is configured to plug into the first outer housing of the photoelectric connector and electrically connect to a third conducting element in the second electrical assembly; the other end of the first conducting element, being a part of the second end and extending out of the outer surface of the photoelectric adapter, is configured to electrically connect to the integrated circuit board; one end of the second conducting element, being a part of the first end, is configured to plug into the first outer housing and electrically connect to a fourth conducting element in the second electrical assembly; and the other end of the second conducting element, being a part of the second end and extending out of the outer surface of the photoelectric adapter, is configured to electrically connect to the integrated circuit board.

According to a second aspect, an embodiment of this application provides a connector. The connector includes a ferrule and a first outer housing, where
the ferrule is partially or completely accommodated in a cavity of the first outer housing, a first slot is disposed on an outer wall of the first outer housing, and the first slot is configured to cooperate with the first protrusion on the first buckle of the adapter in any one of the first aspect or the possible implementations of the first aspect, to fasten the connector to the adapter.

With reference to the second aspect, in a possible implementation, an axial distance between the first slot and a front end face of the ferrule is a first size, and a radial distance between the first slot and a central axis of the ferrule is a second size; and an axial distance between the first protrusion on the adapter and a central position of a ferrule sleeve is the first size, and a radial distance between the first protrusion and a central axis of the ferrule sleeve is the second size. Optionally, an axial distance between a first groove on the adapter and the central position of the ferrule sleeve is greater than the first size, and the axial distance between the first slot and the front end face of the ferrule is a minimum vertical distance between the first slot and the front end face of the ferrule along an axial direction of the ferrule. Because the first slot is a three-dimensional structure, an axial distance between a position of the first slot closest to the front end face of the ferrule and the front end face of the ferrule is "the axial distance between the first slot and the front end face of the ferrule". Similarly, the axial distance between the first protrusion and the central position of the ferrule sleeve is a minimum vertical distance between the first protrusion and the central position of the ferrule sleeve along an axial direction of the ferrule sleeve, and an axial distance between a position of the first protrusion closest to the central position of the ferrule sleeve and the central position of the ferrule sleeve is "the axial distance between the first protrusion and the central position of the ferrule sleeve".

With reference to the second aspect or the foregoing possible implementation of the second aspect, in another possible implementation, the connector is specifically a photoelectric connector, the photoelectric connector further includes a second electrical assembly, and the second electrical assembly is located on an inner side of the first outer housing. It may be understood that, because the second electrical assembly is disposed on the inner side of the first outer housing, human contact with the second electrical assembly unlikely occurs. This can not only avoid circuit damage caused by a short circuit, but also avoid an electric shock.

With reference to any one of the second aspect or the foregoing possible implementations of the second aspect, in another possible implementation, an end face of the first outer housing close to a plug of the photoelectric connector is a non-centrosymmetric structure. It may be understood that, by designing a shape of the first accommodating space of the adapter and designing the profile of the connector, for example, designing an asymmetric structure with a central axis as a center, in the process of plugging the connector into the adapter, the connector can be plugged into the adapter only in a determined direction. Therefore, a foolproof structure can be implemented.

With reference to any one of the second aspect or the foregoing possible implementations of the second aspect, in another possible implementation, the connector further includes:
a tail pipe;
a flexible hard pipe, where an internal cavity of the flexible hard pipe is used for returning of a fiber in a photoelectric hybrid cable, and the flexible hard pipe is located in the tail pipe; and
a push handle, where a first end of the push handle is located in the first outer housing, and a second end of the push handle is located in the tail pipe.

It may be understood that, because the flexible hard pipe is provided in this application, a space can be provided for the fiber to bend inside (a small range), and returning of the fiber can be implemented. It may be understood that, if there is no flexible hard pipe, externally wrapping the fiber with a tight coating, a protective sleeve, and a cable sheath in sequence is equivalent to fixing the fiber, and the fiber cannot return. Once the fiber cannot return, the fiber may break under great stress.

With reference to any one of the second aspect or the foregoing possible implementations of the second aspect, in another possible implementation, a first end of the flexible hard pipe is connected to the second end of the push handle or plugged into the push handle from the second end of the push handle. It may be understood that, after the flexible hard pipe is connected to the push handle, the flexible hard pipe does not move randomly, thereby providing a stable environment for returning of the fiber in the flexible hard pipe, and preventing the fiber from breaking.

With reference to any one of the second aspect or the foregoing possible implementations of the second aspect, in another possible implementation, the connector further includes an inner housing, where the inner housing encloses the flexible hard pipe and the push handle. It may be understood that, because the inner housing encloses the flexible hard pipe and the push handle, reliability of the connection between the flexible hard pipe and the push handle can be improved, and the flexible hard pipe does not move randomly, thereby providing a stable environment for returning of the fiber in the flexible hard pipe, and preventing the fiber from breaking.

With reference to any one of the second aspect or the foregoing possible implementations of the second aspect, in another possible implementation, the tail pipe encloses the push handle, the inner housing, the flexible hard pipe, and the photoelectric hybrid cable. It may be understood that, because the tail pipe is disposed, stability of the push handle, the inner housing, the flexible hard pipe, and the photoelectric hybrid cable can be further improved.

With reference to any one of the second aspect or the foregoing possible implementations of the second aspect, in another possible implementation, the second electrical assembly includes an insulating terminal block, the insulating terminal block is disposed between two conducting elements, a third protrusion for preventing relative moving of the insulating terminal block and the two conducting elements is disposed on the conducting element, and a fourth protrusion for buckling the first outer housing is disposed on the insulating terminal block. This design can improve stability of the second electrical assembly in the first outer housing.

With reference to any one of the second aspect or the foregoing possible implementations of the second aspect, in another possible implementation, the second electrical assembly includes a third conducting element and a fourth conducting element, both a first end of the third conducting element and a first end of the fourth conducting element are located on the inner side of the first outer housing, the first end of the third conducting element and the first end of the fourth conducting element are respectively configured to connect to a first conducting element and a second conducting element in a photoelectric adapter, and a second end of the third conducting element and a second end of the fourth conducting element are respectively electrically connected to two wires in the photoelectric hybrid cable.

With reference to any one of the second aspect or the foregoing possible implementations of the second aspect, in another possible implementation, a first part of the ferrule and a first part of the second electrical assembly are located in one space; and the first part of the ferrule is a part of the ferrule that is in the first outer housing and close to a plug of the photoelectric connector, and the first part of the second electrical assembly is a part of the second electrical assembly that is in the first outer housing and close to the plug of the photoelectric connector.

With reference to any one of the second aspect or the foregoing possible implementations of the second aspect, in another possible implementation, the first part of the ferrule and the first part of the second electrical assembly are respectively located in two separate spaces; and the first part of the ferrule is a part of the ferrule that is in the first outer housing and close to the plug of the photoelectric connector, and the first part of the second electrical assembly is a part of the second electrical assembly that is in the first outer housing and close to the plug of the photoelectric connector.

With reference to any one of the second aspect or the foregoing possible implementations of the second aspect, in another possible implementation, the connector further includes a ferrule flange and a second spring, where
the ferrule is connected to a first end of the ferrule flange in the first outer housing; and
a second end of the ferrule flange is in contact with the first end of the push handle by using the second spring.

It may be understood that the second spring can provide an elastic force for the ferrule through the ferrule flange, to ensure that after the ferrule is plugged into the adapter with the connector, an end face of the ferrule better fits in with an end face of another ferrule plugged from the other end of the photoelectric adapter.

According to a third aspect, an embodiment of this application provides a photoelectric connector. The photoelectric connector includes a ferrule, a first outer housing, and a second electrical assembly, where
the first outer housing includes a front end face, a rear end face, and an inner side face and an outer surface that connect the front end face and the rear end face, the inner side face encloses a cavity, the ferrule is partially or completely located in the cavity, the second electrical assembly is partially or completely located in the cavity, the front end face encloses a first socket and a second socket, the first socket is disposed correspondingly with the ferrule, and the second socket is disposed correspondingly with the second electrical assembly.

It may be understood that, because the second electrical assembly is disposed on the inner side of the first outer housing, human contact with the second electrical assembly unlikely occurs. This can not only avoid circuit damage caused by a short circuit, but also avoid an electric shock.

With reference to the third aspect, in another possible implementation,
the first socket is connected to the second socket; or
the first socket and the second socket are independent of each other.

With reference to the third aspect or the foregoing possible implementation of the third aspect, in another possible implementation, the ferrule extends out of the first outer housing from the first socket, and the second electrical assembly does not extend out of the first outer housing from the second socket. It may be understood that, because the ferrule extends out of the first outer housing from the first socket, the ferrule can be better plugged into a ferrule sleeve in an adapter, and because the second electrical assembly does not extend out of the first outer housing from the second socket, a short circuit of the second electrical assembly or a human electric shock can be avoided.

With reference to any one of the third aspect or the foregoing possible implementations of the third aspect, in another possible implementation, the front end face of the first outer housing that is close to a plug of the photoelectric connector is in an asymmetric shape or a shape with only one axis of symmetry. It may be understood that, by designing a shape of a first accommodating space of the adapter and designing the profile of the connector, for example, designing an asymmetric structure with a central axis as a center, in the process of plugging the connector into the adapter, the connector can be plugged into the adapter only in a determined direction. Therefore, a foolproof structure can be implemented.

With reference to any one of the third aspect or the foregoing possible implementations of the third aspect, in another possible implementation, the photoelectric connector further includes:
a tail pipe;
a flexible hard pipe, where an internal cavity of the flexible hard pipe is used for returning of a fiber in a photoelectric hybrid cable, and the flexible hard pipe is located in the tail pipe; and
a push handle, where a first end of the push handle is located in the first outer housing, and a second end of the push handle is located in the tail pipe.

It may be understood that, because the flexible hard pipe is provided in this application, a space can be provided for the fiber to bend inside (a small range), and returning of the fiber can be implemented. It may be understood that, if there is no flexible hard pipe, externally wrapping the fiber with a tight coating, a protective sleeve, and a cable sheath in sequence is equivalent to fixing the fiber, and the fiber cannot return. Once the fiber cannot return, the fiber may break under great stress.

With reference to any one of the third aspect or the foregoing possible implementations of the third aspect, in another possible implementation, a first end of the flexible hard pipe is connected to the second end of the push handle or plugged into the push handle from the second end of the push handle. It may be understood that, after the flexible hard pipe is connected to the push handle, the flexible hard pipe does not move randomly, thereby providing a stable environment for returning of the fiber in the flexible hard pipe, and preventing the fiber from breaking.

With reference to any one of the third aspect or the foregoing possible implementations of the third aspect, in another possible implementation, the photoelectric connector further includes an inner housing, where the inner housing encloses the flexible hard pipe and the push handle. It may be understood that, because the inner housing encloses the flexible hard pipe and the push handle, reliability of the connection between the flexible hard pipe and the push handle can be improved, and the flexible hard pipe does not move randomly, thereby providing a stable environment for returning of the fiber in the flexible hard pipe, and preventing the fiber from breaking.

With reference to any one of the third aspect or the foregoing possible implementations of the third aspect, in another possible implementation, the tail pipe encloses the push handle, the inner housing, the flexible hard pipe, and the photoelectric hybrid cable. It may be understood that, because the tail pipe is disposed, stability of the push handle, the inner housing, the flexible hard pipe, and the photoelectric hybrid cable can be further improved.

With reference to any one of the third aspect or the foregoing possible implementations of the third aspect, in another possible implementation, the second electrical assembly includes an insulating terminal block, the insulating terminal block is disposed between two conducting elements, a third protrusion for preventing relative moving of the insulating terminal block and the two conducting elements is disposed on the conducting element, and a fourth protrusion for buckling the first outer housing is disposed on the insulating terminal block. This design can improve stability of the second electrical assembly in the first outer housing.

With reference to any one of the third aspect or the foregoing possible implementations of the third aspect, in another possible implementation, the second electrical assembly includes a third conducting element and a fourth conducting element, both a first end of the third conducting element and a first end of the fourth conducting element are located on an inner side of the first outer housing, the first end of the third conducting element and the first end of the fourth conducting element are respectively configured to connect to a first conducting element and a second conducting element in a photoelectric adapter, and a second end of the third conducting element and a second end of the fourth conducting element are respectively electrically connected to two wires in the photoelectric hybrid cable.

With reference to any one of the third aspect or the foregoing possible implementations of the first aspect, in another possible implementation, the photoelectric connector further includes a ferrule flange and a second spring, where
the ferrule is connected to a first end of the ferrule flange in the first outer housing; and
a second end of the ferrule flange is in contact with the first end of the push handle by using the second spring.

It may be understood that the second spring can provide an elastic force for the ferrule through the ferrule flange, to ensure that after the ferrule is plugged into the adapter with the connector, an end face of the ferrule better fits in with an end face of another ferrule plugged from the other end of the photoelectric adapter.

With reference to any one of the third aspect or the foregoing possible implementations of the first aspect, in another possible implementation, a first slot is disposed on an outer wall of the first outer housing, and the first slot is configured to cooperate with a first protrusion on a first buckle of the adapter to fasten the photoelectric connector to the adapter.

With reference to any one of the third aspect or the foregoing possible implementations of the first aspect, in another possible implementation, an axial distance between the first slot and a front end face of the ferrule is a first size, and a radial distance between the first slot and a central axis of the ferrule is a second size; and an axial distance between the first protrusion on the adapter and a central position of a ferrule sleeve is the first size, an axial distance between a first groove on the adapter and the central position of the ferrule sleeve is the first size, and a radial distance between the first protrusion and a central axis of the ferrule sleeve is the second size. Optionally, the axial distance between the first groove on the adapter and the central position of the ferrule sleeve is greater than the first size, and an axial distance between the first slot and a front end of the ferrule is a minimum vertical distance between the first slot and the front end face of the ferrule along an axial direction of the ferrule. Because the first slot is a three-dimensional structure, an axial distance between a position of the first slot closest to the front end face of the ferrule and the front end face of the ferrule is "the axial distance between the first slot and the front end face of the ferrule". Similarly, the axial distance between the first protrusion and the central position of the ferrule sleeve is a minimum vertical distance between the first protrusion and the central position of the ferrule sleeve along an axial direction of the ferrule sleeve, and an axial distance between a position of the first protrusion closest to the central position of the ferrule sleeve and the central position of the ferrule sleeve is "the axial distance between the first protrusion and the central position of the ferrule sleeve".

### BRIEF DESCRIPTION OF DRAWINGS

The following describes accompanying drawings used in embodiments of the present invention.
FIG. 1 is a schematic diagram of a specific application scenario, and specifically an FTTH network, for a connector according to this application;
FIG. 2 is a schematic diagram of a specific implementation of a communications device in which a connector is located according to this application;
FIG. 3 is a view of an assembled photoelectric connector in one direction according to an embodiment of this application;
FIG. 4 is a schematic exploded view of a photoelectric connector according to an embodiment of this application;
FIG. 5 is a cross-sectional view of a photoelectric connector in one direction according to an embodiment of this application;
FIG. 6 is a view of a first outer housing in one direction according to an embodiment of this application;
FIG. 7 is a view of a first outer housing in another direction according to an embodiment of this application;
FIG. 8 is a view of a first outer housing after a ferrule is plugged in one direction according to an embodiment of this application;
FIG. 9 is a view of a first outer housing after a push handle is plugged in one direction according to an embodiment of this application;
FIG. 10 is a view of a second electrical assembly in one direction according to an embodiment of this application;
FIG. 11 is a view of a first outer housing after a second electrical assembly is plugged in one direction according to an embodiment of this application;
FIG. 12A is a view of a first outer housing after a second electrical assembly is plugged in another direction according to an embodiment of this application;
FIG. 12B is a cross-sectional view of a first outer housing after a second electrical assembly is plugged according to an embodiment of this application;
FIG. 13 is a schematic diagram of relative positions of different components in a first outer housing according to an embodiment of this application;
FIG. 14 is a view of a first outer housing in one direction according to an embodiment of this application;
FIG. 15 is a view of a first outer housing in another direction according to an embodiment of this application;
FIG. 16A is a schematic diagram of a first outer housing covered with a dustproof cap according to an embodiment of this application;
FIG. 16B is a cross-sectional view of a first outer housing covered with a dustproof cap in one direction according to an embodiment of this application;
FIG. 17 is a schematic diagram of a structure of a flexible hard pipe and a photoelectric hybrid cable according to an embodiment of this application;
FIG. 18 is a schematic diagram of a connection between a flexible hard pipe and a push handle according to an embodiment of this application;
FIG. 19 is a schematic diagram of a sleeving inner housing according to an embodiment of this application;
FIG. 20 is a schematic diagram of an inner housing sleeved with a tail pipe according to an embodiment of this application;
FIG. 21 is a view of a photoelectric adapter in one direction according to an embodiment of this application;
FIG. 22 is a view of a photoelectric adapter in another direction according to an embodiment of this application;
FIG. 23 is a schematic diagram of a connection between a photoelectric adapter and a photoelectric connector according to an embodiment of this application;
FIG. 24 is a schematic diagram of a structure of a first electrical assembly according to an embodiment of this application;
FIG. 25A is a schematic diagram of a connection between a first electrical assembly and a second electrical assembly according to an embodiment of this application;
FIG. 25B is a cross-sectional view of a connection between a first electrical assembly and a second electrical assembly in one direction according to an embodiment of this application;
FIG. 26 is a cross-sectional view of a photoelectric adapter in one direction according to an embodiment of this application;
FIG. 27 is a cross-sectional view of a photoelectric adapter in another direction according to an embodiment of this application;
FIG. 28 is a cross-sectional view of a photoelectric adapter in another direction according to an embodiment of this application;
FIG. 29 is a schematic diagram of shapes of interconnection parts of a photoelectric adapter and a photoelectric connector according to an embodiment of this application;
FIG. 30 is a schematic diagram of shapes of interconnection parts of a photoelectric adapter and a photoelectric connector according to an embodiment of this application;
FIG. 31 is a view of an assembled connector in one direction according to an embodiment of this application;
FIG. 32 is a schematic exploded view of a connector according to an embodiment of this application;
FIG. 33 is a view of a first outer housing in one direction according to an embodiment of this application;
FIG. 34 is a view of a first outer housing in another direction according to an embodiment of this application;
FIG. 35 is a view of a first outer housing and a ferrule that are assembled according to an embodiment of this application;
FIG. 36 is a schematic diagram of a structure of an adapter according to an embodiment of this application; and
FIG. 37 is a schematic diagram of a structure of an adapter according to an embodiment of this application.

### DESCRIPTION OF EMBODIMENTS

For ease of understanding, the following explains and describes related technical terms used in embodiments of this application.

An axial direction may be understood as an axial direction of a connector, and is equivalent to an extension direction of a fiber and a ferrule, that is, a direction in which a tail end of the fiber extends to a front end of the fiber and then continues to extend to a front end of the ferrule. The axial direction is equivalent to an axial direction of a housing assembly sleeved over a periphery of the fiber in a photoelectric connector plug.

A radial direction is a direction perpendicular to the axial direction.

The connector in embodiments of this application may be a photoelectric connector that integrates a function of a fiber connector plug and a function of an electrical connector plug. A cable connected to the photoelectric connector is a photoelectric hybrid cable, that is, both a fiber and an electrical cable are included. Alternatively, the connector may be a fiber connector that has a function of a fiber connector plug but does not have a function of an electrical connector plug. A cable connected to the fiber connector is an optical cable, but does not include an electrical cable.

An adapter in embodiments of this application may be a photoelectric adapter, or may be a fiber adapter. The photoelectric adapter can be adapted to the foregoing photoelectric connector, and the photoelectric adapter integrates a function of a fiber adapter and a function of an electrical adapter. The fiber adapter can be adapted to the foregoing fiber connector.

The following describes embodiments of this application with reference to the accompanying drawings in embodiments of this application.

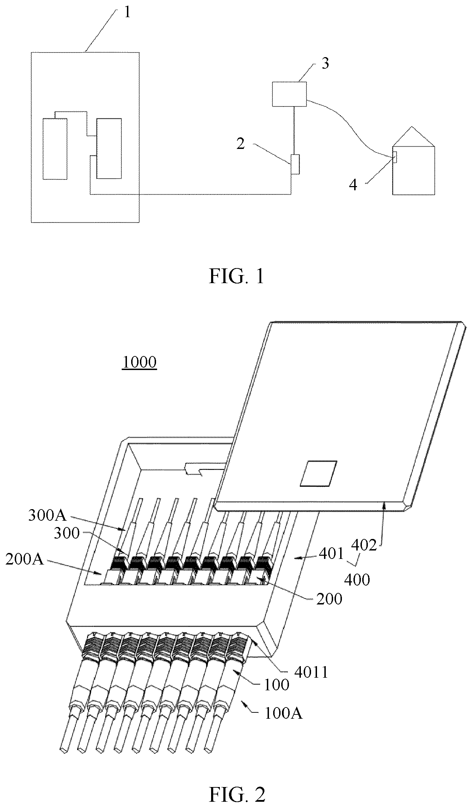

The connector, adapter, connector assembly, and communications device provided in this application are applied to an FTTx system. The FTTx system may be but is not limited to FTTH (fiber to the home, fiber to the home), FTTC (fiber to the curb, fiber to the curb), FTTP (fiber to the premises, fiber to the premises), FTTN (fiber to the node or neighborhood, fiber to the node), FTTO (fiber to the office, fiber to the office), or FTTSA (fiber to the service area, fiber to the service area). Embodiments of this application are described by using an example in which the communications device is applied to a fiber to the home (fiber to the home, FTTH) system. FIG. 1 is a schematic diagram of an FTTH network. Referring to FIG. 1, a connectorised fiber distribution point (Connectorised Fiber Distribution Point, CFDP) 2 and a fiber distribution box (3) are disposed between a central office (Central Office, CO) 1 and a customer terminal box (Customer Splicing Point, CSP) 4. A communications device in the central office (1) is connected to the connectorised fiber distribution point (2) by using an optical cable, to distribute signals to the connectorised fiber distribution point (2). The connectorised fiber distribution point (2) transmits the signals to the fiber distribution box (3) by using an optical cable, and then the signals are output by the fiber distribution box (3) (transmitted by using an optical cable) to the customer terminal box (4).

The communications device provided in this application may be but is not limited to a fiber access terminal (fiber access terminal, FAT) or a splitting and splicing closure (splitting and splicing closure, SSC).

FIG. 2 is a schematic diagram of a communications device (1000) provided in an implementation. The communications device (1000) includes a second outer housing (400), an adapter assembly (200A), an indoor connector assembly (300A), and an outdoor connector assembly (100A). The adapter assembly (200A) is fastened to the second outer housing (400). The indoor connector assembly (300A) is accommodated in the second outer housing (400). The outdoor connector assembly (100A) is located outside the second outer housing (400). In addition, the outdoor connector assembly (100A) and the indoor connector assembly (300A) can be connected to each other to implement interconnection by using the adapter assembly (200A), thereby implementing optical signal transmission.

It should be understood that a difference between the indoor connector assembly (300A) and the outdoor connector assembly (100A) lies in their usage scenarios. It may be understood that the indoor connector assembly (300A) is located in the second outer housing (400) in a relatively closed space, and can be effectively isolated from outside dust, water vapor, or the like. It may be understood that the outdoor connector assembly (100A) is located outside the second outer housing (400) in a relatively open space, and needs to have a better environmental adaptability to cope with a complex and variable external environment.

Specifically, the second outer housing (400) includes a box (401) and a top cover (402) covering the box (401). A plurality of external sockets (4011) arranged side by side are disposed in the box (401), and the external sockets (4011) may be arranged in one row or a plurality of rows. The adapter assembly (200A) includes a plurality of adapters (200). A quantity of the adapters (200) is equal to or less than a quantity of the external sockets (4011) (being less than means that some external sockets may be reserved for other purposes). In other implementations, the external sockets (4011) may alternatively be disposed on the top cover (402). Each adapter (200) can be correspondingly disposed at a position of a corresponding external socket (4011).

The indoor connector assembly (300A) includes a plurality of indoor connectors (300), and all the indoor connectors (300) are accommodated in the second outer housing (400). In addition, a quantity of the indoor connectors (300) is the same as a quantity of the adapters (200), or may be less than a quantity of the adapters (200), so that each indoor connector (300) can be plugged into a corresponding adapter (200).

The outdoor connector assembly (100A) includes a plurality of outdoor connectors (100). A quantity of the outdoor connectors (100) may be the same as the quantity of the adapters (200), or may be less than the quantity of the adapters (200), so that each outdoor connector (100) can be plugged into a corresponding adapter (200) from the outside of the second outer housing (400).

It may be understood that an opening adapted to the indoor connector (300) and an opening adapted to the outdoor connector (100) are disposed at two ends of the adapter (200) respectively. The indoor connector (300) and the outdoor connector (100) are respectively plugged into the two openings of the adapter (200), so that ferrules of the indoor connector (300) and the outdoor connector (100) are interconnected in the adapter (200), that is, two fibers that need to be connected are interconnected. In this way, optical signals output by a transmit fiber can be coupled to a receive fiber to a greatest extent.

Therefore, each indoor connector (300) and each outdoor connector (100) can be plugged into the corresponding adapter (200) from the inside and outside of the second outer housing (400) respectively, so that each indoor connector (300) and the corresponding outdoor connector (100) can be interconnected. In other words, one indoor connector (300), one adapter (200), and one outdoor connector (100) can together form a connector assembly to implement optical signal transmission over a link.

The communications device (1000) provided in this application includes a plurality of external sockets (4011) arranged in rows or arranged in a plurality of rows, and an adapter (200) is correspondingly disposed at a position of an external socket (4011). In this way, more connection ports can be arranged in a limited space, and density of adapters arranged in the communications device can be improved.

The connector provided in this application may be an outdoor connector (100) in the communications device (1000) in the implementation shown in FIG. 2, or may be an indoor connector (300) in the communications device (1000) in the implementation shown in FIG. 2. The following describes in detail specific embodiments of three connectors with different structures and adapters that cooperate with the connectors, where the connectors are outdoor connectors.

The following describes a first embodiment in detail by using an example in which the connector (100) is a photoelectric connector (100) and the adapter (200) is a photoelectric adapter (200).

In this embodiment of this application, a first end and a second end of a component on the photoelectric connector (100) are first described. After the photoelectric connector (100) is plugged into the photoelectric adapter (200), one end of the photoelectric connector (100) that is plugged into the photoelectric adapter (200) may be referred to as a "photoelectric connector plug", and some components on the photoelectric connector (100) may have a first end and a second end. The first end refers to one end close to the plug of the photoelectric connector (100), and the second end refers to one end away from the plug of the photoelectric connector (100). For example, components such as a ferrule, a ferrule flange, a push handle, a first outer housing, and a flexible hard pipe are mentioned later. In this case, a first end of the ferrule refers to one end of the ferrule close to the photoelectric connector plug, and a second end of the ferrule refers to one end of the ferrule away from the photoelectric connector plug; a first end of the ferrule flange refers to one end of the ferrule flange close to the photoelectric connector plug, and a second end of the ferrule flange refers to one end of the ferrule flange away from the photoelectric connector plug; a first end of the push handle refers to one end of the push handle close to the photoelectric connector plug, and a second end of the push handle refers to one end of the push handle away from the photoelectric connector plug; a first end of the first outer housing refers to one end of the first outer housing close to the photoelectric connector plug, and a second end of the first outer housing refers to one end of the first outer housing away from the photoelectric connector plug; a first end of the flexible hard pipe refers to one end of the flexible hard pipe close to the photoelectric connector plug, and a second end of the flexible hard pipe refers to one end of the flexible hard pipe away from the photoelectric connector plug; and a first end and a second end of any other component on the photoelectric connector may be deduced by analogy. In addition, an end face of the first end mentioned herein may be referred to as a front end face, and an end face of the second end mentioned herein may be referred to as a rear end face.

About the photoelectric connector (100):

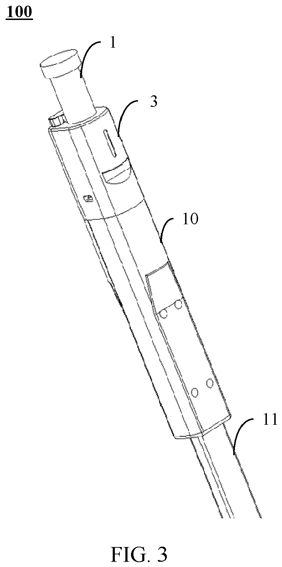

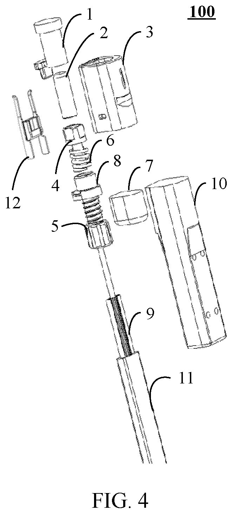

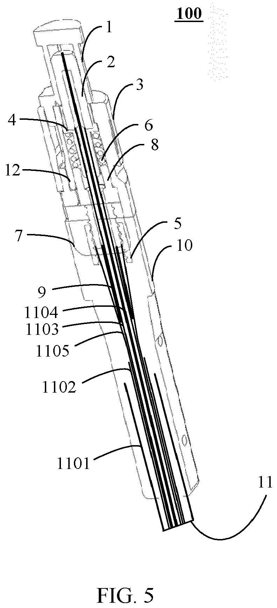

FIG. 3 is a view of the assembled photoelectric connector (100) in one direction. FIG. 4 is a schematic exploded view of the photoelectric connector (100). FIG. 5 is a cross-sectional view in an axial direction.

The photoelectric connector (100) includes a ferrule (2), a first outer housing (3), and a second electrical assembly (12). The first outer housing (3) includes a cavity. Specifically, the first outer housing (3) includes a front end face, a rear end face, and an inner side face and an outer surface that connect the front end face and the rear end face. The inner side face encloses the cavity. The ferrule (2) is partially or completely accommodated (or located) in the cavity. The second electrical assembly (12) is partially or completely accommodated (or is located) in the cavity. Therefore, it may be considered that the ferrule (2) is located on an inner side of the first outer housing (3), and the second electrical assembly (12) is located on the inner side of the first outer housing (3). In addition, the second electrical assembly (12) does not protrude from the front end face of the first outer housing (3), and a first slot coupled to a first buckle on a photoelectric adapter is disposed on an outer wall of the first outer housing (3).

Optionally, the photoelectric connector (100) may further include a ferrule flange (4), a push handle (8), and a photoelectric hybrid cable (11). As a whole, the ferrule (2), the first outer housing (3), the ferrule flange (4), and the push handle (8) may be considered as axially connected, and this axis is a fiber in the photoelectric hybrid cable. Specifically, insides of the ferrule (2), the ferrule flange (4), and the push handle (8) are cavities, and the fiber in the photoelectric hybrid cable (11) is used to enter the second end of the push handle (8), and successively pass through the cavities in the ferrule (2), the ferrule flange (4), and the push handle (8). For example, the fiber successively passes through the push handle (8), the ferrule flange (4), and the ferrule (2). There is a tight coating on the outside of the fiber passing through the push handle (8) and the ferrule flange (4), but there is no tight coating on the outside of the fiber passing through the ferrule (2).

The second end of the ferrule (2) is connected to the first end of the ferrule flange (4). The second end of the ferrule flange (4) is in contact with the first end of the push handle (8) by using a second spring (6).

Optionally, the photoelectric connector (100) may further include a flexible hard pipe (9). A first end of the flexible hard pipe (9) is connected to the second end of the push handle (8) or plugged into the push handle (8) from the second end of the push handle (8). An internal cavity of the flexible hard pipe (9) is used for returning of the fiber in the photoelectric hybrid cable (11), that is, the fiber in the photoelectric hybrid cable (11) further passes through the flexible hard pipe (9). The flexible hard pipe (9) is located in a tail pipe (10), that is, an outer side of the flexible hard pipe (9) is sleeved with the tail pipe (10), so that the flexible hard pipe (9) is protected. The first end of the push handle (8) is located in the first outer housing (3), and the second end of the push handle (8) is located in the tail pipe (10).

Optionally, the photoelectric connector (100) further includes an inner housing (7), where the inner housing (7) encloses the push handle (8) and the flexible hard pipe (9), and optionally, may further enclose an entire section or a part of a nut (5).

Optionally, the photoelectric connector (100) further includes the tail pipe (10). The tail pipe (10) encloses the inner housing (7), the push handle (8), the flexible hard pipe (9), and a part of the photoelectric hybrid cable (11). One side of the first end of the tail pipe (10) fits in with one side of the second end of the first outer housing (3).

Optionally, with respect to the manner in which the second end of the ferrule (2) is connected to the first end of the ferrule flange (4), the second end of the ferrule (2) and the first end of the ferrule flange (4) may be respectively plugged into the cavity of the first outer housing (3) from cavity openings at both ends of the first outer housing (3). Optionally, the ferrule (2) may alternatively be plugged into the cavity of the first outer housing (3) after being connected to the ferrule flange (4). Certainly, the ferrule (2) and the ferrule flange (4) may alternatively be sleeved with the first outer housing (3) after the second end of the ferrule (2) is connected to the first end of the ferrule flange (4). Certainly, the ferrule (2) and the ferrule flange (4) may alternatively be disposed in the first outer housing (3) in another manner. This is not limited herein. In addition, the ferrule (2) is connected to the ferrule flange (4) in a plurality of manners. This is not limited herein. For example, the connection may be riveting. For example, there is a cavity opening at the first end of the ferrule flange (4), and the second end of the ferrule (2) may be plugged into the ferrule flange (4) from the cavity opening. In addition, a protrusion is provided on an inner wall of the ferrule flange (4), and the protrusion on the inner wall of the ferrule flange (4) blocks the ferrule (2) and can prevent the ferrule (2) from being completely plugged into the cavity of the ferrule flange (4).

With respect to the manner in which the second end of the ferrule flange (4) is in contact with the first end of the push handle (8) by using the second spring (6), for example, a blocking member is disposed at the second end of the ferrule flange (4), a blocking member is also disposed at the first end of the push handle (8), and the blocking member of the ferrule flange (2) and the blocking member of the push handle (8) are used to prevent the spring from being disengaged between the ferrule flange (4) and the push handle (8) when the spring is stressed. The second spring (6) can provide an elastic force for the ferrule (2) through the ferrule flange (4), to ensure that after the ferrule (2) is plugged into the photoelectric adapter (200) with the photoelectric connector (100), an end face of the ferrule (2) better fits in with an end face of another ferrule plugged from the other end of the photoelectric adapter (200). An inner wall of the first outer housing (3) is in contact with an outer wall of the ferrule flange (4) and an outer wall of the push handle (8) to stabilize the ferrule flange (4) and the push handle (8).

The following describes the second electrical assembly in detail.

The second electrical assembly (12) includes two conducting elements, such as a third conducting element and a fourth conducting element. The two conducting elements are electrically connected to two wires in the photoelectric hybrid cable (11) respectively. The second electrical assembly (12) is located on the inner side of the first outer housing (3). It should be noted that the first outer housing (3) may be considered as including one side face and two end faces. The two end faces of the first outer housing (3) include an end face close to the first end of the first outer housing (3) and an end face close to the second end of the first outer housing (3). The two end faces are perpendicular to the axial direction. The side face is a face sandwiched between the two end faces on the first outer housing (3), and the side face is approximately perpendicular to the two end faces. Optionally, the inner side of the first outer housing (3) described herein specifically does not extend beyond the side face. Optionally, the second electrical assembly (12) may be plugged from the cavity opening at the second end of the first outer housing (3). One end of the second electrical assembly (12) close to the photoelectric connector plug may be referred to as a first end of the second electrical assembly (12). One end of the second electrical assembly (12) away from the photoelectric connector plug may be referred to as a second end of the second electrical assembly (12). The first end of the second electrical assembly (12) may be completely accommodated in the cavity of the first outer housing (3). The second end of the second electrical assembly (12) is electrically connected to the two wires in the photoelectric hybrid cable (11). For example, each of a second end of the third conducting element and a second end of the fourth conducting element is connected to one wire. The second end of the second electrical assembly (12) is completely accommodated in the cavity of the first outer housing (3) or protrudes out of the first outer housing (3). When protruding, a protruding part of the second electrical assembly (12) is embedded in the tail pipe (10). Therefore, for the photoelectric connector (100), the second electrical assembly (12) connected to the photoelectric hybrid cable is not exposed, and risks of an electric shock and a short circuit can be effectively avoided.

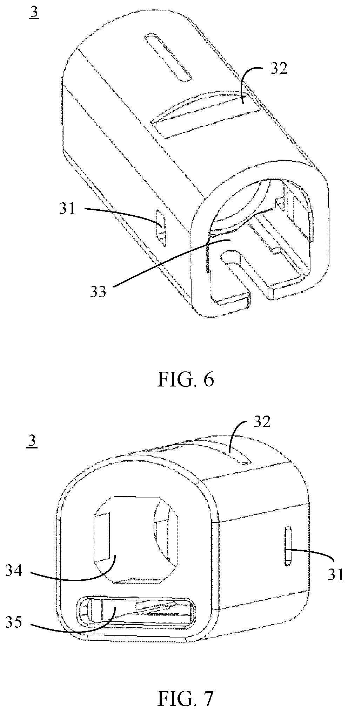

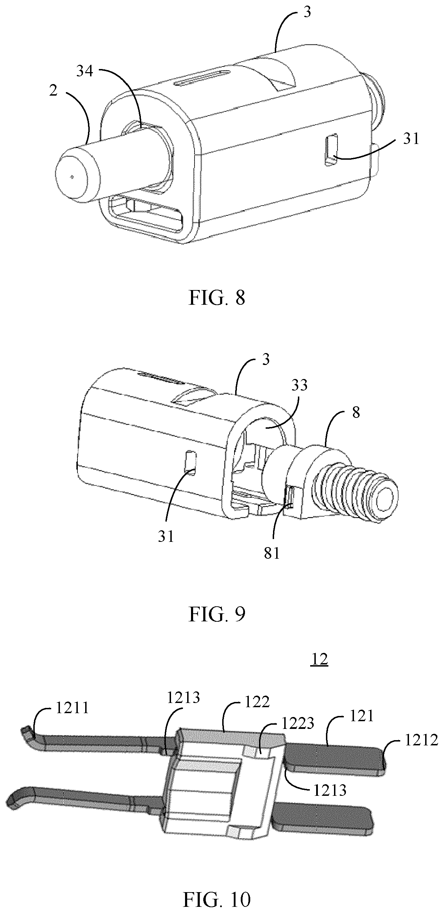

Referring to FIG. 6 to FIG. 9, FIG. 6 is a view of the first outer housing (3). FIG. 7 is another view of the first outer housing (3). The first outer housing (3) includes a second slot (31), a first slot (32), a first cavity opening (33), a first socket (34), and a second socket (35). The first cavity opening (33) is an opening of the cavity of the first outer housing (3) on the rear end face of the first outer housing (3). The first socket (34) and the second socket (35) are respectively two openings of the cavity of the first outer housing (3) on the front end face of the first outer housing (3). Specifically, the first socket (34) and the second socket (35) are enclosed by the front end face of the first outer housing (3). The first socket (34) is disposed correspondingly with the ferrule, and the second socket (35) is disposed correspondingly with the second electrical assembly (12). As shown in FIG. 9, the ferrule (2) is located in the cavity of the first outer housing (3) and extends from the first socket (34) of the first outer housing (the ferrule may not be in contact with the inner wall of the first outer housing (3)). In the cavity of the first outer housing (3), the second end of the ferrule (2) is connected to the first end of the ferrule flange (4). Also in the cavity of the first outer housing (3), the second end of the ferrule flange (4) is in contact with the first end of the push handle (8) by using the spring (6). As shown in FIG. 8, the first end of the push handle (8) is located in the cavity of the first outer housing (3), and the second end of the push handle (8) extends from the first cavity opening (33) of the first outer housing (3). A second buckle (81) of the push handle (8) is clamped from the inner wall of the first outer housing (3) into the second slot (31) of the first outer housing (3), thereby fastening the push handle (8) on the first outer housing (3). The first slot (32) on the first outer housing (3) is coupled to a first buckle on the photoelectric adapter (200). The first slot (32) and the first buckle are configured to fasten the photoelectric connector (100) and the photoelectric adapter (200).

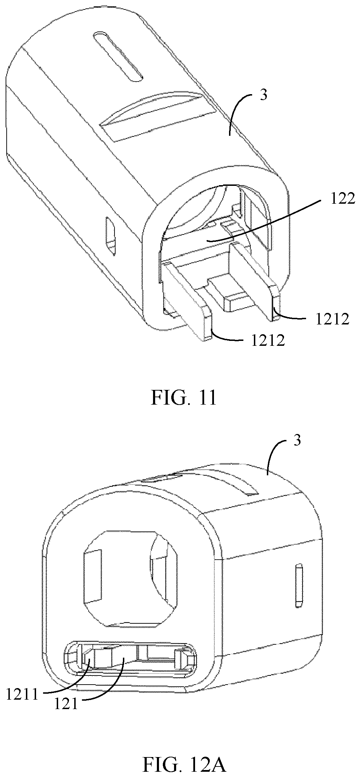

Referring to FIG. 10 to FIG. 12A, FIG. 10 is a schematic diagram of a structure of the second electrical assembly (12). The second electrical assembly (12) includes at least two conducting elements (121) and one insulating terminal block (122). Two conducting elements (121) are illustrated in FIG. 10, and the two conducting elements may be referred to as a third conducting element (121) and a fourth conducting element (121) respectively. Because the two conducting elements (121) have similar structures, only one of the conducting elements (121) is numbered. It can be learned that the insulating terminal block (122) is disposed between the two conducting elements (121), that is, between the third conducting element and the fourth conducting element. Specifically, at least two third protrusions (1213) are disposed on a surface of each conducting element (121). The insulating terminal block (122) can be clamped by the two third protrusions (1213), and when the two conducting elements (121) both clamp the insulating terminal block 122, relative moving of the insulating terminal block (122) and the two conducting elements 121 can be prevented. For a quantity of the third protrusions (1213), there are also other possibilities, and the quantity is not limited herein. Two third protrusions (1213) disposed on each conducting element (121) are illustrated in FIG. 10. A fourth protrusion (1223) is disposed on a surface of the terminal block (122), and is configured to prevent the second electrical assembly (12) from moving in the first outer housing (3). There may be one or more fourth protrusions (1223). Two fourth protrusions (1223) are illustrated in FIG. 10. Optionally, the fourth protrusion (1223) mentioned herein may also be referred to as a rib, a convex rib, or the like. In addition, two ends of the conducting element (121) are respectively a first end (1211) and a second end (1212). As shown in FIG. 7, in the cavity of the first outer housing (3), the first end (1211) of the conducting element (121) is located at a position close to the second socket (35). As shown in FIG. 12A, it can be seen from the first end of the first outer housing (3) that the first end (1211) of the conducting element (121) is completely accommodated in the cavity and does not extend out of the second socket (35); however, the second end (1212) of the conducting element (121) may be located in the cavity of the first outer housing (3) or may extend out of the cavity of the first outer housing (3) from the first cavity opening (33) of the first outer housing (3). For example, FIG. 11 shows that the second end (1212) of the conducting element (121) extends from the first cavity opening (33) of the first outer housing (3). The second end (1212) of the conducting element (121) is configured to electrically connect to one wire in the photoelectric hybrid cable (11). For example, the second end (1212) of the third conducting element (121) is electrically connected to one wire, and the second end (1212) of the fourth conducting element (121) is electrically connected to another wire.

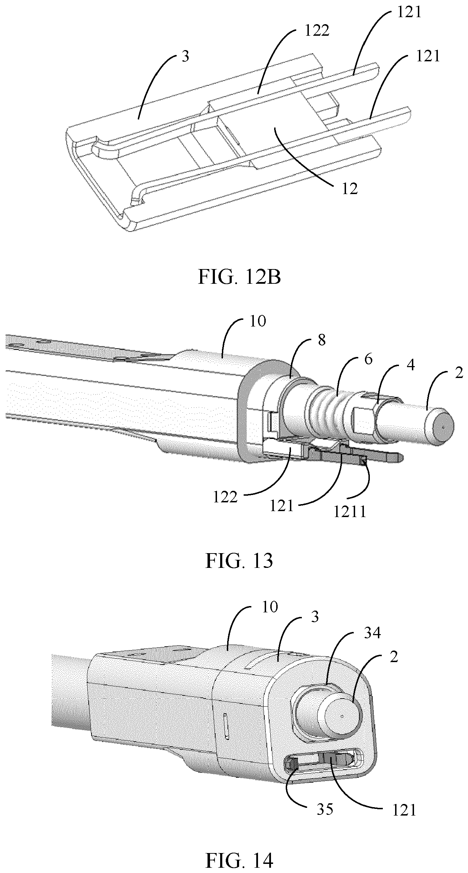

FIG. 12B is a cross-sectional view of the second electrical assembly (12) in the first outer housing (3). It can be learned from FIG. 12B that a position relationship between the second electrical assembly (12) and the inner wall of the first outer housing (3) is as follows: The second electrical assembly (12) is coupled to the inner wall of the first outer housing (3) to fasten the second electrical assembly (12) in the first outer housing (3).

Referring to FIG. 13 and FIG. 14, FIG. 13 shows a part of the push handle (8), the second spring (6), the ferrule flange (4), the ferrule (2), the insulating terminal block (122) on the second electrical assembly (12), the conducting element (121) on the second electrical assembly (12), and a relative position of the first end (1211) of the conducting element (121) in the first outer housing (3). FIG. 13 is a view hiding the first outer housing (3). FIG. 14 is a view observed from the photoelectric connector plug after the first outer housing (3) is mounted on a basis of FIG. 13. In the structure shown in FIG. 14, the ferrule (2) extends from the first socket (34), but the first end (1211) of the third conducting element (121) and the first end (1211) of the fourth conducting element (121) of the two conducting elements (121) do not extend from the corresponding second sockets (35). Visually, the first socket (34) from which the ferrule (2) extends and the second socket (35) that is closest to the first ends (1211) of the two conducting elements (121) are separated or mutually independent, that is, the first end of the ferrule (2) and the first ends (1211) of the two conducting elements (121) are located in different spaces.

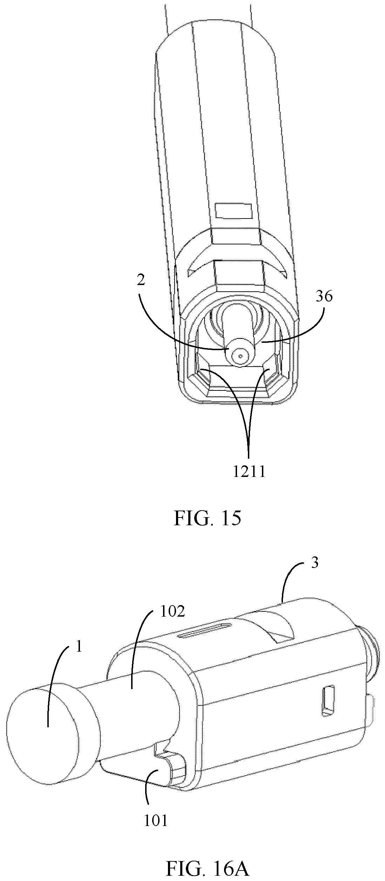

In an optional solution, the first socket (34) is connected to the second socket (35). Therefore, it seems that the first socket (34) and the second socket (35) are actually one cavity opening, which may be referred to as a third socket (36). As shown in FIG. 15, a front end of the first outer housing (3) includes the third socket (36), the ferrule (2) does not extend from the third socket (36), and the first end (1211) of each of the two conducting elements (121) is located on the inner wall of the first outer housing (3). The two conducting elements (121) may be centrally disposed on the inner wall of the first outer housing (3), or may be separately disposed. This is not limited in this application. The first ends (1211) of the two conducting elements (121) are in a vicinity of the third socket (36), but do not extend out of the third socket (36). Visually, the ferrule (2) and the first end (1211) of the conducting element (121) are located in one space.

Optionally, regardless of the solution shown in FIG. 14 or the solution shown in FIG. 15, the first end of the ferrule (2) may extend out of the first socket (34) or the third socket (36), or may not extend out of the first socket (34) or the third socket (36). In other words, the ferrule (2) may or may not protrude from the front end face of the first outer housing (3).

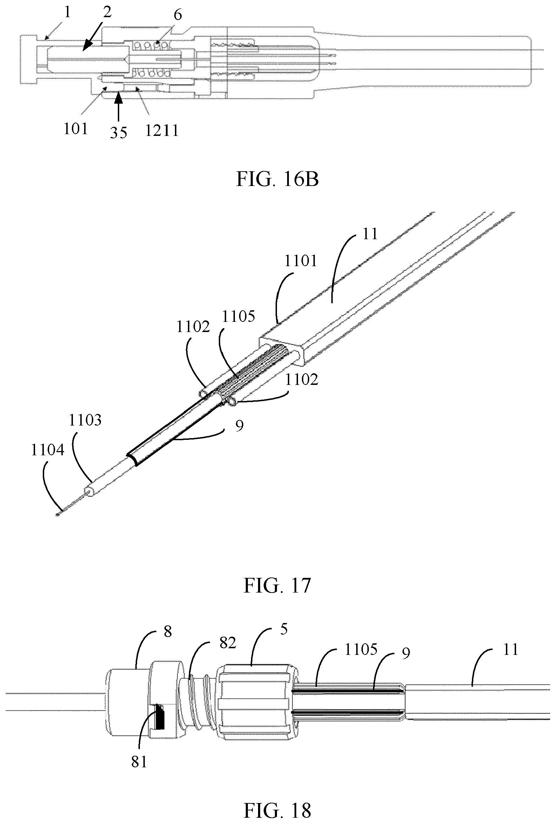

In an optional solution, a dustproof cap (1) may be further disposed. The dustproof cap (1) is configured to cover the ferrule (2) and the first end (1211) of the conducting element (121) from the first end of the first outer housing (3), to prevent the ferrule (2) and the first end (1211) of the conducting element (121) from being exposed and prevent the ferrule (2) and the first end (1211) of the conducting element (121) from being in contact with external substances such as dust and water. It may be understood that, when the first outer housing (3) has the structure shown in FIG. 14, the dustproof cap (1) essentially includes two main parts, where one part (102) is coupled to the first socket (34) and the ferrule (2), and the other part (101) is coupled to the second socket (35) and the first end (1211) of the conducting element (121), specifically as shown in FIG. 16A. Further, for better understanding an internal combining status of the dustproof cap (1) and the first outer housing (3), a cross-sectional view shown in FIG. 16B is further provided. It can be learned that a cavity in the dustproof cap (1) accommodates the ferrule (2), and a protruding tongue (101) of the dustproof cap penetrates into the cavity of the first outer housing (3) from the second socket (35), thereby isolating the first end (1211) of the conducting element (121) from the outside. Optionally, a maximum diameter of the second socket (35) is less than 12.5 mm, to satisfy IP20 on the whole and prevent finger contact.

The following describes the flexible hard pipe (9) in detail.

As shown in FIG. 17, an outer layer of the photoelectric hybrid cable (11) is a cable sheath (1101), and the cable sheath (1101) wraps a wire (1102) and a fiber (1104). The fiber (1104) is externally provided with a tight coating (1103) and a protective sleeve (1105) in sequence (seen from inside to outside). Optionally, the protective sleeve (1105) may be aramid. In this embodiment of this application, one flexible hard pipe (9) is disposed, the fiber (1104) wrapped with the tight coating (1103) may be inserted into the flexible hard pipe (9), and the flexible hard pipe (9) is inserted into the protective sleeve (1105). Therefore, the wire (1102) does not pass through the flexible hard pipe (9). The flexible hard pipe (9) has certain hardness. The flexible hard pipe (9) may be bent but cannot be bent to a large angle. Therefore, bending and breaking of the fiber in the flexible hard pipe (9) can be avoided, and a space for returning of the fiber is provided. For example, the flexible hard pipe (9) may be made of a polybutylene terephthalate (Polybutylene terephthalate, PBT) material. Herein, returning of the fiber is briefly described. When photoelectric connectors are plugged into both ends of the photoelectric adapter (200), an interaction force is generated between ferrules (such as ceramic ferrules) of the two photoelectric connectors, causing the ferrules of the two photoelectric connectors to move away from each other. Consequently, fibers in the two photoelectric connectors are caused to move away from each other, that is, the fibers are caused to return. Because the flexible hard pipe (9) is provided in this application, a space can be provided for the fiber to bend inside (a small range), and returning of the fiber can be implemented. It may be understood that, if there is no flexible hard pipe (9), externally wrapping the fiber with the tight coating, the protective sleeve, and the cable sheath in sequence is equivalent to fixing the fiber, and the fiber cannot return. Once the fiber cannot return, the fiber may break under great stress.

In a solution, the first end of the flexible hard pipe (9) (specifically, one end close to the photoelectric connector plug) may be connected to the second end (82) of the push handle (8), for example, connected by using a buckle or connected by using glue. In another solution, the first end of the flexible hard pipe (9) is plugged into the push handle (8) from an end face of the second end of the push handle (8).

As shown in FIG. 18, the second end (82) of the push handle (8) may be a threaded structure (82). The threaded structure (82) of the push handle (8) and the nut (5) may cooperate to embed the protective sleeve (1105) of the photoelectric hybrid cable (11) between the push handle (8) and the nut (5), thereby fastening the photoelectric hybrid cable (11). The protective sleeve (1105) can withstand a pulling force, can stabilize the connection between the push handle (8) and the flexible hard pipe (9), and can also stabilize the photoelectric hybrid cable (11). A length of the flexible hard pipe (9) may be set based on an actual requirement, and is not limited herein. Optionally, a material of the nut (5) may be an insulating material, such as aramid. Because the nut (5) is designed as an insulator, a short circuit between wires in the photoelectric hybrid cable (11) can be effectively prevented, and safety can be improved.

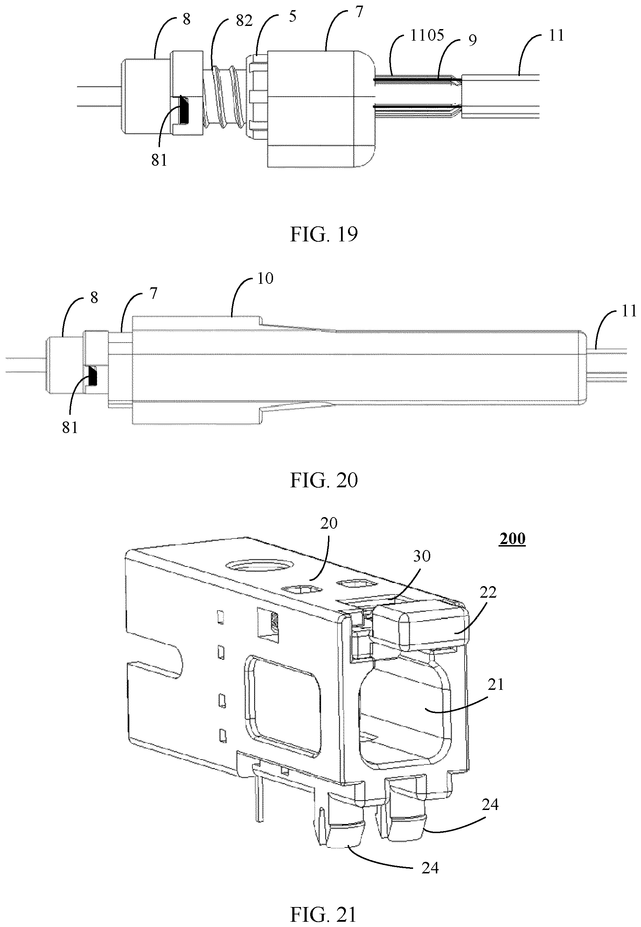

Optionally, as shown in FIG. 19, the photoelectric connector (100) further includes the inner housing (7), where the inner housing (7) encloses the push handle (8) and the flexible hard pipe (9), and may further enclose the entire section or a part of the nut (5). The inner housing (7) is configured to fasten the push handle (8) and the flexible hard pipe (9). The inner housing (7) may be formed by injection molding. For example, after the nut (5) is screwed onto the push handle (8), a low-temperature injection molding material is injected at contact parts between the nut (5), the push handle (8), and the flexible hard pipe (9) to form the inner housing (7). Because the inner housing (7) is formed by injection molding, the inner housing (7) can be fully combined with the push handle (8) and the flexible hard pipe (9), and can fasten the push handle (8) and the flexible hard pipe (9). Herein, because the low-temperature injection molding material is selected for injection molding, the injection molding material can be prevented from permeating into the flexible hard pipe (9) from a contact part between the push handle (8) and the flexible hard pipe (9) and impacting the fiber (1104) in the flexible hard pipe (9). Therefore, damage caused by the injection molding process to the fiber (1104) is avoided. Optionally, the low-temperature injection molding material herein is a material having relatively high fluidity during injection molding, for example, PE. Because of relatively high fluidity, excessive pressure does not need to be applied in the injection molding process. Therefore, the low-temperature injection molding material can be prevented from impacting the fiber (1104), and the fiber (1104) is prevented from being deformed and damaged.

Optionally, as shown in FIG. 20, the photoelectric connector (100) further includes the tail pipe (10). The tail pipe (10) encloses the inner housing (7), the push handle (8), the flexible hard pipe (9), and a part of the photoelectric hybrid cable (11). One side of the tail pipe (10) close to the first end of the push handle (8) (that is, one end of the tail pipe (10) close to the photoelectric connector plug) fits in with one side of the first end of the first outer housing (3) close to the push handle (8) (that is, one end of the first outer housing (3) away from the photoelectric connector plug), and a visual effect of the fitting is that the first outer housing (3) is basically integrated with the tail pipe (10). Optionally, the tail pipe (10) may be disposed after the inner housing (7) is disposed. For example, after the inner housing (7) is formed by injection molding, a high-temperature injection molding material is further injected outside the inner housing (7), the flexible hard pipe (9), and a part of the photoelectric hybrid cable (11), and used to fix and protect the inner housing (7), the flexible hard pipe (9), and the part of the photoelectric hybrid cable (11). FIG. 20 is a schematic diagram of a relative position relationship between the push handle (8), the inner housing (7), the tail pipe (10), and the photoelectric hybrid cable (11) after the tail pipe (10) is obtained by injection molding. The high-temperature injection molding material specifically includes an injection molding material whose melting temperature is higher than a melting temperature of the cable sheath (1101). Because the melting temperature of the high-temperature injection molding material is higher than that of the cable sheath (1101), the cable sheath is melted to some extent during injection molding of the high-temperature injection molding material. Therefore, the tail pipe (10) obtained by injection molding is better integrated with the cable sheath (1101), and tightness of protection of the tail pipe (10) for the photoelectric hybrid cable is enhanced. Optionally, the tail pipe (10) may alternatively be formed without injection molding. For example, two halves of the first outer housing are coupled outside the inner housing (7), the flexible hard pipe (9), and a part of the photoelectric hybrid cable (11), thereby forming the tail pipe (10) that encloses the inner housing (7), the flexible hard pipe (9), and the part of the photoelectric hybrid cable (11). The two coupled halves of the first outer housing may be fastened by using a buckle and a slot, or tightened by using a screw and a thread, or combined in other manners. This is not limited herein.

It should be noted that the low-temperature injection molding material includes an injection molding material whose melting temperature is lower than that of the high-temperature injection molding material, so that a layer of the surface of the inner housing (7) can be melted in the high-temperature injection molding process. Therefore, the tail pipe (10) obtained by injection molding is better integrated with the inner housing (7), and tightness of protection of the tail pipe (10) is enhanced.

It should be noted that a melting temperature of the flexible hard pipe (9) is higher than the melting temperature of the high-temperature injection molding material, so that the flexible hard pipe (9) does not melt or soften in the injection molding process of the high-temperature injection molding material. Therefore, not only bending of the fiber (1104) in the flexible hard pipe (9) can be avoided, but also a stable space is provided for returning of the fiber (1104).

Optionally, after the push handle (8), the nut (5), the flexible hard pipe (9), the photoelectric hybrid cable (11), the inner housing (7), and the tail pipe (10) are integrally assembled, the first end of the push handle (8) may be pushed into the cavity of the first outer housing (3) from the second end of the first outer housing (3), and the second buckle (81) on the push handle (8) is fastened to the second slot (31) on the first outer housing (3), thereby fastening the push handle (8) and the first outer housing (3). After the push handle (8) and the first outer housing (3) are fastened, one side of the first outer housing (3) away from the photoelectric connector plug fits in with one side of the tail pipe (10) close to the photoelectric connector plug.

In FIG. 20, on one side close to the photoelectric connector plug, the tail pipe (10) does not completely enclose the inner housing (7). In this case, a part of the inner housing (7) not enclosed by the tail pipe (10) may be enclosed by (or inserted into) the first outer housing (3), so that a fitting position between the first outer housing (3) and the tail pipe (10) is on an outer surface of the inner housing (7). Optionally, the tail pipe (10) may alternatively completely enclose the inner housing (7). In this case, a fitting position between the first outer housing (3) and the tail pipe (10) is on an outer surface of the push handle (8). Certainly, other cases may also exist, and examples are not provided herein.

It can be learned from the foregoing description that both the second electrical assembly (12) and the push handle (8) are disposed in the first outer housing (3). In specific implementation, in a process of disposing the inner housing (7), the second electrical assembly (12) is also wrapped in the inner housing (7). For example, the second electrical assembly (12) may be placed along the foregoing axial direction before low-temperature injection molding. Observed from a direction perpendicular to the axial direction (that is, a radial direction), the second end (1212) of the second electrical assembly (12) is farther away from the photoelectric connector plug than the second end of the push handle (8). Observed from the axial direction, the second electrical assembly (12) may be close to the push handle (8), or a relatively short distance is reserved between the second electrical assembly (12) and the push handle (8), and then low-temperature injection molding is performed to obtain the inner housing (7). In this way, the second electrical assembly (12) can be integrated with the push handle (8). Certainly, the second electrical assembly (12) may not be wrapped in the inner housing (7). Instead, the second electrical assembly (12) is wrapped in the tail pipe (10) when the tail pipe (10) is disposed after the inner housing (7) is obtained. For details, refer to the foregoing description of wrapping the second electrical assembly (12) in the inner housing (7). FIG. 13 shows that the second electrical assembly (12) is wrapped in the inner housing (7) to integrally connect to the push handle (8).

In addition, after the second end (1212) of the second electrical assembly (12) is electrically connected to a wire in the photoelectric hybrid cable (11), joints of the electrical connection (such as welding joints) and wires near the joints are also wrapped in the inner housing (7) or the tail pipe (10).

In this embodiment of this application, two end faces of the flexible hard pipe (9) are located between two end faces of the tail pipe (10). In other words, the flexible hard pipe (9) used for returning of the fiber does not occupy an axial space alone, but shares a space with the tail pipe (10). Compared with a conventional method in which a main axis (for returning of a fiber) and a tail pipe (10) are sequentially disposed in series in an axial direction, this embodiment of this application significantly reduces a space size of the photoelectric connector (100).

About the photoelectric adapter (200):

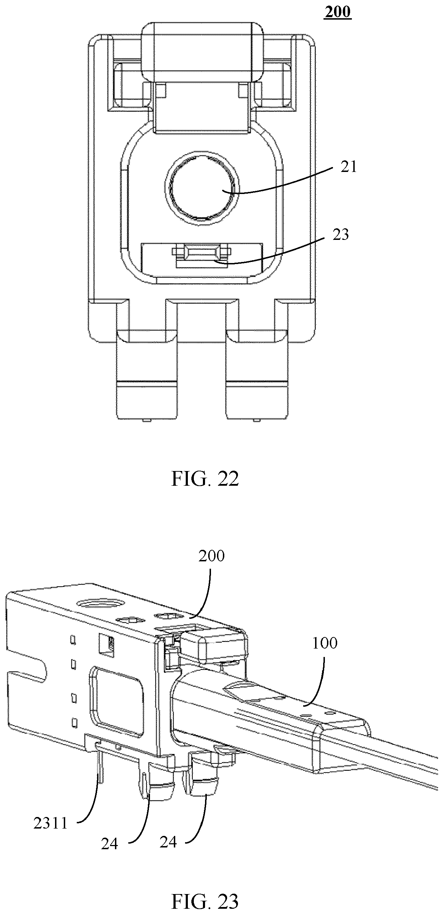

FIG. 21 is a view of the photoelectric adapter (200) in one direction according to an embodiment of this application. FIG. 22 is a view of the photoelectric adapter (200) in another direction according to an embodiment of this application. The photoelectric adapter (200) includes a housing (20), and a first accommodating space (21) is disposed in the housing (20). As shown in FIG. 23, the first accommodating space (21) is configured to accommodate the photoelectric connector (100). For example, the first accommodating space (21) forms an opening on the housing, and the first accommodating space (21) is configured to accommodate the first outer housing (3) of the photoelectric connector from the opening. The photoelectric adapter (200) further includes a mushroom head (24), and the mushroom head (24) is configured to plug into an integrated circuit board to fasten the photoelectric adapter (200). In addition, a first groove (30) is disposed on the housing.

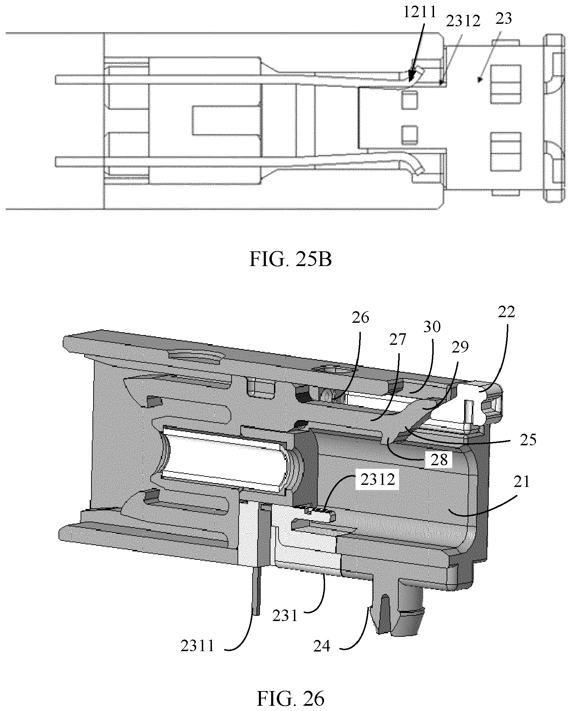

In an optional solution, as shown in FIG. 26, the photoelectric adapter (200) further includes a first buckle (25). The first buckle (25) is disposed in the first accommodating space (21) and is fastened to the housing (20). The first buckle (25) includes a first protrusion (28) and a second protrusion (29). The first protrusion (28) is configured to cooperate with the first slot (32) on the first outer housing (3) to fasten the photoelectric adapter (200) and the photoelectric connector (100). The first groove (30) is configured to provide a movable space for the second protrusion (29). The second protrusion (29) is configured to move in the first groove under an external force and drive the first protrusion (28) away from the first slot (32).

Optionally, the first buckle (25) is fastened to the housing (20) by using an elastic support (27). The first buckle (25) and the elastic support (27) may be two components, that is, the first buckle (25) and the elastic support (27) are independent components, and the two components are fixedly connected by means of buckle-slot cooperation, or fixedly connected by means of adhesive bonding. Alternatively, the first buckle (25) and the elastic support (27) are two parts of one component, that is, the first buckle (25) and the elastic support (27) are an integrally formed structure, where one end of the elastic support (27) is fastened on the housing (20), and the other end of the elastic support (27) is fastened on the first buckle (25).

The second protrusion (29) includes a slope. The slope is inclined with respect to an axial direction of the photoelectric adapter (200). The slope is configured to cooperate with an operating handle (22). The slope is configured to convert an axial force of the operating handle (22) on the slope into a radial force, and the radial force is used to drive the first buckle (25) to move away from the first slot (32).

When the photoelectric connector (100) is accommodated in the first accommodating space (21), a first end of the first protrusion (28) is plugged into the first slot (32) on the first outer housing (3) of the photoelectric connector (100). When the photoelectric connector needs to be unlocked from the first accommodating space, the operating handle (22) moves toward the first buckle (25) to generate a force on the first buckle (25). Because the first buckle (25) is connected to the elastic support (27), the elastic support (27) also receives the force, and the elastic support (27) receiving force is deformed in a direction away from the first slot (32) due to action of the slope. Correspondingly, the first protrusion (28) of the first buckle (25) deviates from the first slot (32) with the elastic support (27), and the deviation of the first buckle (25) causes the second protrusion (29) to also move away from the first slot (32). Due to presence of the first groove (30), there is a sufficient space for the second protrusion (29) to deviate.

Relative positions of the operating handle (22) and the first buckle (25) are not limited herein, provided that when the operating handle (22) is pushed (or moved), the elastic support (27) can be deformed in the direction away from the first slot (32) due to an interaction force between the operating handle (22) and the first buckle (25), and the first protrusion (28) of the first buckle (25) is finally driven to deviate from the first slot (32).

The operating handle (22) is a component beyond the photoelectric adapter, or a component on the photoelectric adapter. When the operating handle (22) is a component on the photoelectric adapter (200), the operating handle (22) can be movably connected to the housing (20). In this case, an optional position relationship between the operating handle (22) and the first buckle (25) is as follows: The operating handle (22) is located at one end of the photoelectric adapter (200) closer to the connected photoelectric connector (100), and the first buckle (25) is located at one end of the photoelectric adapter (200) away from the connected photoelectric connector (100). Certainly, the disposition may alternatively be as follows: The operating handle (22) is located at one end of the photoelectric adapter (200) away from the connected photoelectric connector (100), and the first buckle (25) is located at one end of the photoelectric adapter (200) closer to the connected photoelectric connector (100). Certainly, there are also other manners.

In an optional solution, the photoelectric adapter (200) further includes a first spring (26). The first spring (26) is elastically connected between the housing (20) and the operating handle (22). In the process of unlocking the photoelectric connector (100) and the photoelectric adapter (200), the operating handle (22) moves relative to the housing (20) and compresses the first spring (26), and after unlocking, the operating handle (22) springs back to its original position under an elastic holding force of the first spring (26). As shown in FIG. 26, when the operating handle (22) is pushed to move in a direction toward the first buckle (25), the first spring (26) is compressed to accumulate a force opposite to the movement direction of the operating handle (22), and when there is no external interference on the operating handle (22), the force accumulated by the first spring (26) is released, thereby pushing the operating handle (22) to return to its original position before the movement.

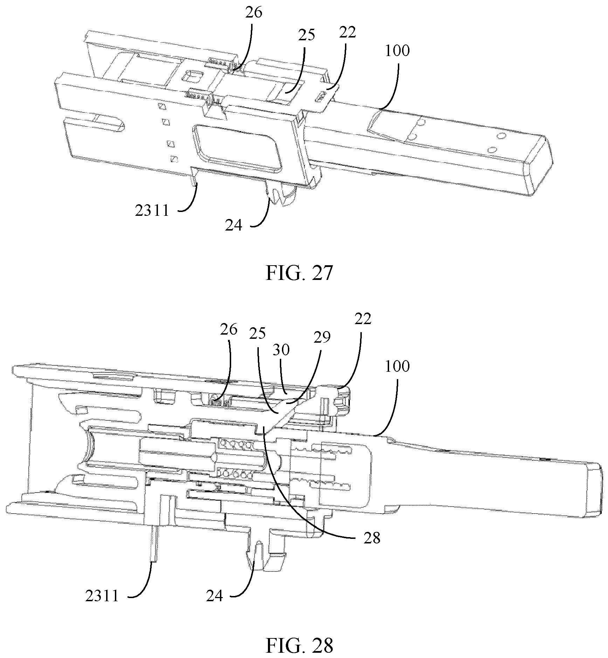

FIG. 27 and FIG. 28 are cross-sectional views of the photoelectric adapter (200) in different directions. It should be noted that FIG. 26 and FIG. 27 are merely views of an optional structure of the photoelectric adapter (200). Other structures are not illustrated herein.

It should be noted that one end of the photoelectric adapter (200) is configured to plug the photoelectric connector (100), and the other end of the photoelectric adapter (200) is configured to plug another photoelectric connector (100). The two photoelectric connectors (100) both have the second spring (6) mentioned above. Therefore, when the other photoelectric connector (100) is also plugged into the photoelectric adapter (200), under the action of the two second springs (6) on the two photoelectric connectors (100), there is a force to push the two photoelectric connectors (100) out of the photoelectric adapter (200). Therefore, after the first protrusion (28) of the first buckle (25) leaves the first slot (32), the photoelectric connector (100) moves in a direction away from the photoelectric adapter (200) under the force, and therefore is unfastened from the photoelectric adapter and unlocked.

Optionally, the photoelectric adapter (200) further includes a first electrical assembly (23). A first end of the first electrical assembly (23) is located in the first accommodating space (21), and is configured to electrically connect to the second electrical assembly in the first outer housing of the photoelectric connector (100). A second end of the first electrical assembly is located on an outer surface of the photoelectric adapter (200), and is configured to electrically connect to the integrated circuit board.

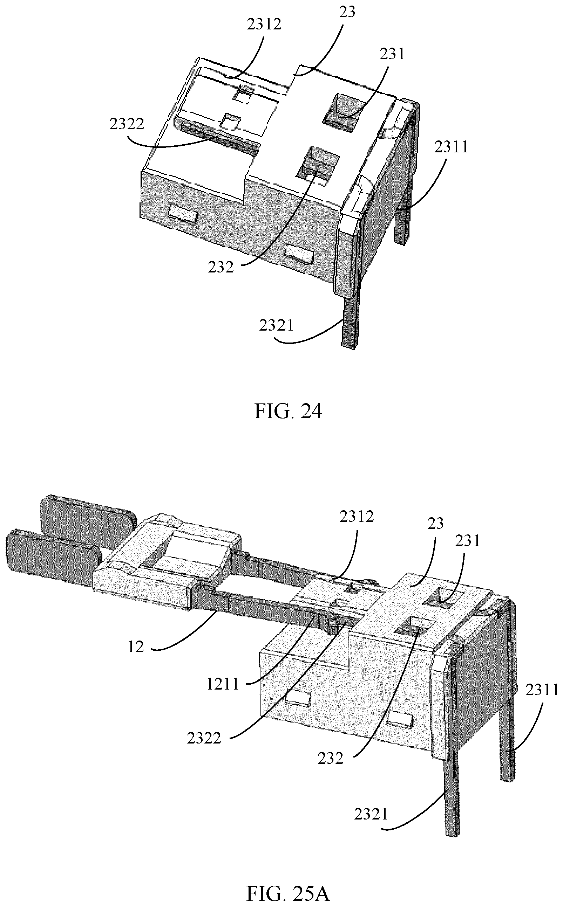

Optionally, as shown in FIG. 24, the first electrical assembly (23) includes a first conducting element (231) and a second conducting element (232). One end of the first conducting element (231), being a part of the first end, is configured to plug into the first outer housing (3) of the photoelectric connector (100) and electrically connect to the third conducting element (121) in the second electrical assembly (12). The other end of the first conducting element (231), being a part of the second end and extending out of the outer surface of the photoelectric adapter (200), is configured to electrically connect to the integrated circuit board. One end of the second conducting element (232), being a part of the first end, is configured to plug into the first outer housing (3) and electrically connect to the fourth conducting element (121) in the second electrical assembly (12). The other end of the second conducting element (232), being a part of the second end and extending out of the outer surface of the photoelectric adapter (200), is configured to electrically connect to the integrated circuit board.

FIG. 25A shows one end (2312) of the first conducting element (231) and one end (2322) of the second conducting element (232) of the first electrical assembly (23), and the two conducting elements (131) of the second electrical assembly (12) in the first outer housing (3) respectively. In actual application, a structure of the first electrical assembly (23) is not limited to structures shown in FIG. 24 and FIG. 25A. In addition, for better understanding the connection between one end (1211) of the second electrical assembly (12) and the first electrical assembly (23), a cross-sectional view in one direction in which the two are connected is further provided, as shown in FIG. 25B.

Optionally, the first electrical assembly (23) may be assembled into the photoelectric adapter (200) as an independent module. Optionally, a third buckle is disposed on the first electrical assembly (23) and coupled to a third slot on the photoelectric connector (100). The third buckle and the third slot are configured to fasten the first electrical assembly (23) on the photoelectric adapter (200). Optionally, the third buckle is an unlockable buckle. Therefore, the first electrical assembly (23) can be detached from the photoelectric adapter (200).

In this embodiment of this application, to ensure that the photoelectric connector (100) can be plugged into the photoelectric adapter (200) and properly connected to the photoelectric adapter (200), and in particular, to ensure that the ferrule (2) in the photoelectric connector (100) can be plugged into a corresponding slot in the photoelectric adapter (200) and that one end (1211) of the second electrical assembly (12) in the photoelectric adapter (200) is connected to one end (2322) of the second conducting element (232) in the photoelectric adapter (200) (the same is true for the first conducting element), an outer surface profile of the photoelectric connector (100) and an inner surface profile of the photoelectric adapter (200) need to be designed, so that when the photoelectric connector (100) is connected to the photoelectric adapter (200), the ferrule (2) and the second electrical assembly (12) of the photoelectric connector (100) can be adapted to angles in correct positions for plugging into the photoelectric adapter (200), that is, a guide (or guidance) design is provided. By designing a shape of the first accommodating space of the photoelectric adapter (200) and the profile of the photoelectric connector (100), for example, by designing an asymmetric structure using a central axis as a center, the photoelectric connector (100) can be plugged into the photoelectric adapter (200) only in a determined direction in an interconnection process of the photoelectric connector (100) and the photoelectric adapter (200). A foolproof structure can be implemented. For ease of understanding, the following lists several optional guide (or guidance) design solutions.

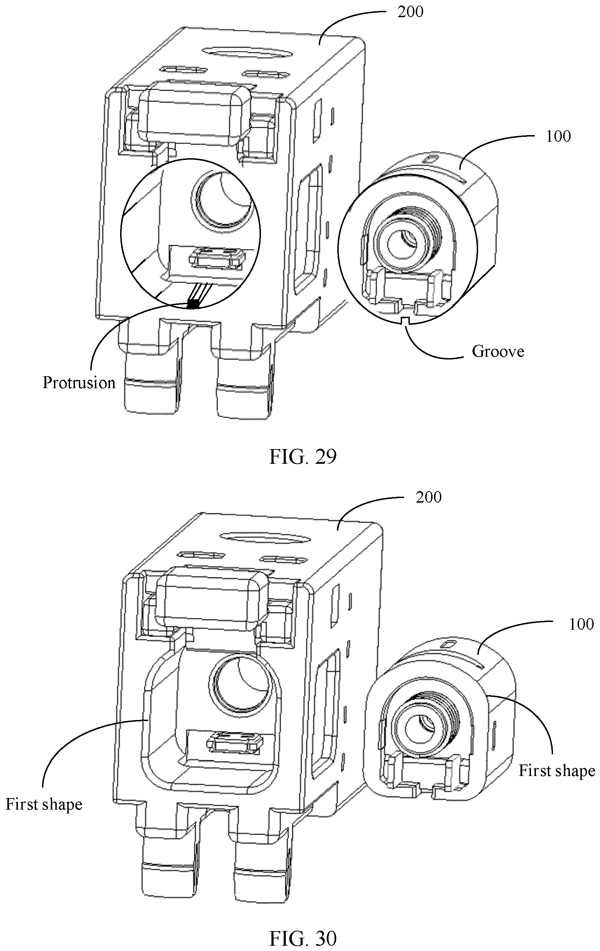

Solution 1: A protrusion is provided on an inner wall of the photoelectric adapter (200), a groove coupled to the protrusion is provided on an outer wall of the first outer housing (3), and the groove and the protrusion are configured to guide the connection between the first outer housing (3) and the photoelectric adapter (200). It may be understood that after the groove and protrusion are designed, if the groove on the first outer housing (3) is not aligned with the protrusion on the photoelectric adapter (200), the photoelectric connector (100) cannot be plugged into the photoelectric adapter (200). When the groove and the protrusion are designed, regardless of whether a profile of the inner wall of the photoelectric adapter (200) and a profile of the outer wall of the photoelectric connector (100) are circles, regular polygons, or other centrosymmetric shapes, no case in which the ferrule (2) and the second electrical assembly (12) cannot be adapted after the photoelectric connector (100) is plugged into the photoelectric adapter (200) occurs. FIG. 29 shows a view of the photoelectric adapter (200) and the photoelectric connector (100) observed from the axial direction.

Solution 2: The end face of the first outer housing (3) that is close to the photoelectric connector plug is a non-centrosymmetric structure. For example, a shape of the photoelectric adapter (200) that is enclosed by the inner wall at one end close to the inserted first outer housing (3) is an asymmetric shape, or a shape with only one axis of symmetry, which may be referred to as a first shape. Correspondingly, the end face of the first outer housing (3) that is close to the plug of the photoelectric connector (100) is in an asymmetric shape or a shape with only one axis of symmetry, that is, also the first shape. It may be understood that the design of the first shape enables the photoelectric connector (100) to plug into the photoelectric adapter (200) only at one angle. Therefore, no case in which the ferrule (2) and the second electrical assembly (12) cannot be adapted after the photoelectric connector (100) is plugged into the photoelectric adapter (200) occurs. FIG. 30 shows a view of the photoelectric adapter (200) and the photoelectric connector (100) observed from the axial direction.

Optionally, an axial distance between the first slot (32) and a front end face of the ferrule (2) is a first size, and a radial distance between the first slot (32) and a central axis of the ferrule (2) is a second size; and an axial distance between the first protrusion (28) on the photoelectric adapter (200) and a central position of a ferrule sleeve is the first size, and a radial distance between the first protrusion (28) and a central axis of the ferrule sleeve is the second size. An axial distance between the first groove (30) on the photoelectric adapter (200) and the central position of the ferrule sleeve is greater than the first size.

An axial distance between the first slot (32) and a front end of the ferrule (2) is a minimum vertical distance between the first slot (32) and the front end face of the ferrule (2) along an axial direction of the ferrule. Because the first slot (32) is a three-dimensional structure, an axial distance between a position of the first slot (32) closest to the front end face of the ferrule (2) and the front end face of the ferrule (2) is "the axial distance between the first slot (32) and the front end face of the ferrule (2)".

The axial distance between the first protrusion (28) and the central position of the ferrule sleeve is a minimum vertical distance between the first protrusion (28) and the central position of the ferrule sleeve along an axial direction of the ferrule sleeve, and an axial distance between a position of the first protrusion (28) closest to the central position of the ferrule sleeve and the central position of the ferrule sleeve is "the axial distance between the first protrusion (28) and the central position of the ferrule sleeve".

The following describes a second embodiment by using an example in which the connector (100) does not include the second electrical assembly (12) and the adapter (200) does not include the first electrical assembly (23).

About the connector (100):
In this embodiment of this application, a first end and a second end of a component on the connector (100) are first described. After the connector (100) is plugged into the adapter (200), one end of the connector (100) that is plugged into the adapter (200) may be referred to as a "connector plug", and some components on the connector (100) may have a first end and a second end. The first end refers to one end close to the connector plug of the connector (100), and the second end refers to one end away from the connector plug of the connector (100). For example, components such as a ferrule, a ferrule flange, a push handle, a first outer housing, and a flexible hard pipe are mentioned later. In this case, a first end of the ferrule refers to one end of the ferrule close to the connector plug, and a second end of the ferrule refers to one end of the ferrule away from the connector plug; a first end of the ferrule flange refers to one end of the ferrule flange close to the connector plug, and a second end of the ferrule flange refers to one end of the ferrule flange away from the connector plug; a first end of the push handle refers to one end of the push handle close to the connector plug, and a second end of the push handle refers to one end of the push handle away from the connector plug; a first end of the first outer housing refers to one end of the first outer housing close to the connector plug, and a second end of the first outer housing refers to one end of the first outer housing away from the connector plug; a first end of the flexible hard pipe refers to one end of the flexible hard pipe close to the connector plug, and a second end of the flexible hard pipe refers to one end of the flexible hard pipe away from the connector plug; and a first end and a second end of any other component on the connector may be deduced by analogy. In addition, an end face of the first end mentioned herein may be referred to as a front end face, and an end face of the second end mentioned herein may be referred to as a rear end face.

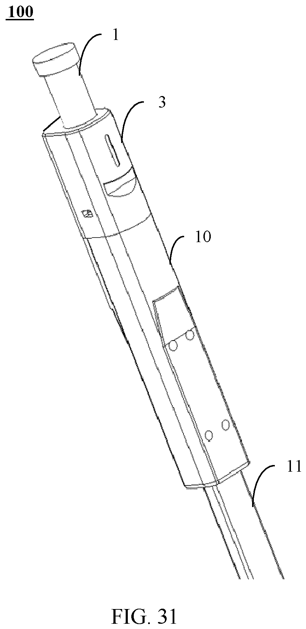

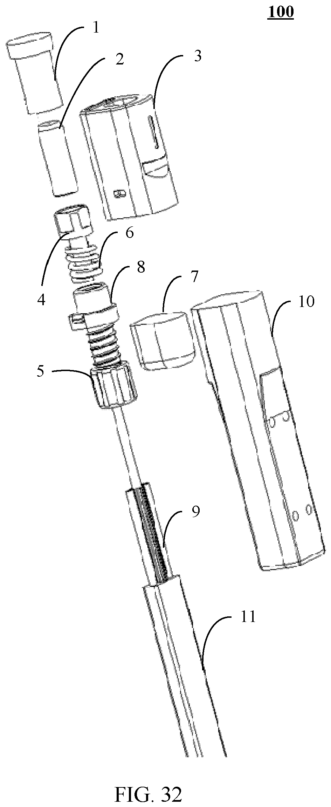

FIG. 31 is a view of the assembled connector (100) in one direction. FIG. 32 is a schematic exploded view of the connector (100).

The connector (100) includes a ferrule (2) and a first outer housing (3). The first outer housing (3) includes a cavity. Specifically, the first outer housing (3) includes a front end face, a rear end face, and an inner side face and an outer surface that connect the front end face and the rear end face. The inner side face encloses the cavity. The ferrule (2) is partially or completely accommodated (or located) in the cavity. Therefore, it may be considered that the ferrule (2) is located on an inner side of the first outer housing (3).

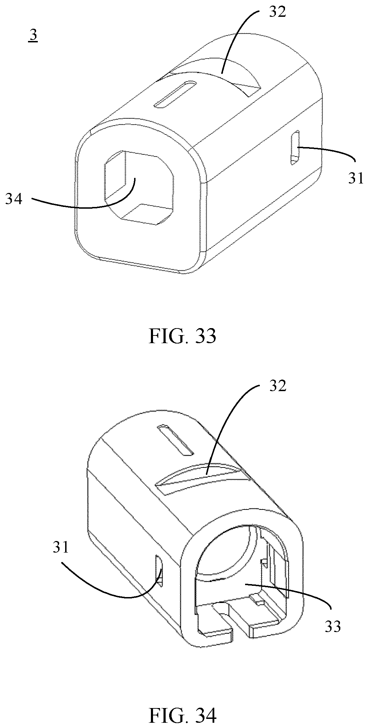

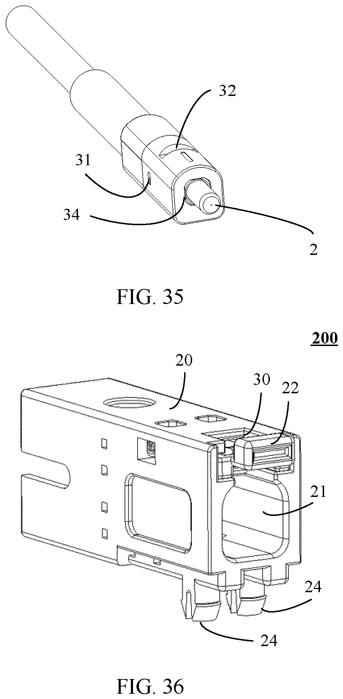

FIG. 33 is a view observed from the front end face of the first outer housing (3). FIG. 34 is a view observed from the rear end face of the first outer housing (3). FIG. 35 is a view of the first outer housing (3) and the ferrule (2) that are assembled in one direction. A first socket (34) is disposed on the front end face of the first outer housing (3), and a first cavity opening (33) is disposed on the rear end face. One end of the ferrule (2) may extend from the first socket (34).

A first slot (32) coupled to a first buckle on the adapter is disposed on an outer wall of the first outer housing (3). More specifically, the first slot (32) is configured to cooperate with a first protrusion on the first buckle of the adapter (200), to fasten the connector to the adapter. Detailed descriptions of structures such as the first protrusion on the first buckle of the adapter (200) are provided later.

Optionally, an axial distance between the first slot (32) and a front end face of the ferrule (2) is a first size, and a radial distance between the first slot (32) and a central axis of the ferrule (2) is a second size; and an axial distance between the first protrusion (28) on the adapter (200) and a central position of a ferrule sleeve is the first size, and a radial distance between the first protrusion (28) and a central axis of the ferrule sleeve is the second size. An axial distance between the first groove (30) on the adapter (200) and the central position of the ferrule sleeve is greater than the first size.

An axial distance between the first slot (32) and a front end of the ferrule (2) is a minimum vertical distance between the first slot (32) and the front end face of the ferrule (2) along an axial direction of the ferrule. Because the first slot (32) is a three-dimensional structure, an axial distance between a position of the first slot (32) closest to the front end face of the ferrule (2) and the front end face of the ferrule is "the axial distance between the first slot (32) and the front end face of the ferrule (2)".

The axial distance between the first protrusion (28) and the central position of the ferrule sleeve is a minimum vertical distance between the first protrusion (28) and the central position of the ferrule sleeve along an axial direction of the ferrule sleeve, and an axial distance between a position of the first protrusion (28) closest to the central position of the ferrule sleeve and the central position of the ferrule sleeve is "the axial distance between the first protrusion (28) and the central position of the ferrule sleeve".

Optionally, the connector (100) may further include a ferrule flange (4), a push handle (8), and a hybrid cable (11). As a whole, the ferrule (2), the first outer housing (3), the ferrule flange (4), and the push handle (8) may be considered as axially connected, and this axis is a fiber in the hybrid cable. Specifically, insides of the ferrule (2), the ferrule flange (4), and the push handle (8) are cavities, and the fiber in the hybrid cable (11) is used to enter the second end of the push handle (8), and successively pass through the cavities in the ferrule (2), the ferrule flange (4), and the push handle (8). For example, the fiber successively passes through the push handle (8), the ferrule flange (4), and the ferrule (2). There is a tight coating on the outside of the fiber passing through the push handle (8) and the ferrule flange (4), but there is no tight coating on the outside of the fiber passing through the ferrule (2).

The second end of the ferrule (2) is connected to the first end of the ferrule flange (4). The second end of the ferrule flange (4) is in contact with the first end of the push handle (8) by using a second spring (6).

Optionally, the connector (100) may further include a flexible hard pipe (9). A first end of the flexible hard pipe (9) is connected to the second end of the push handle (8) or plugged into the push handle (8) from the second end of the push handle (8). An internal cavity of the flexible hard pipe (9) is used for returning of the fiber in the hybrid cable (11), that is, the fiber in the hybrid cable (11) further passes through the flexible hard pipe (9). The flexible hard pipe (9) is located in a tail pipe (10), that is, an outer side of the flexible hard pipe (9) is sleeved with the tail pipe (10), so that the flexible hard pipe (9) is protected. The first end of the push handle (8) is located in the first outer housing (3), and the second end of the push handle (8) is located in the tail pipe (10).

Optionally, the connector (100) further includes an inner housing (7), where the inner housing (7) encloses the push handle (8) and the flexible hard pipe (9), and optionally, may further enclose an entire section or a part of a nut (5).

Optionally, the connector (100) further includes the tail pipe (10). The tail pipe (10) encloses the inner housing (7), the push handle (8), the flexible hard pipe (9), and a part of the hybrid cable (11). One side of the first end of the tail pipe (10) fits in with one side of the second end of the first outer housing (3).

Optionally, with respect to the manner in which the second end of the ferrule (2) is connected to the first end of the ferrule flange (4), the second end of the ferrule (2) and the first end of the ferrule flange (4) may be respectively plugged into the cavity of the first outer housing (3) from cavity openings at both ends of the first outer housing (3). Optionally, the ferrule (2) may alternatively be plugged into the cavity of the first outer housing (3) after being connected to the ferrule flange (4). Certainly, the ferrule (2) and the ferrule flange (4) may alternatively be sleeved with the first outer housing (3) after the second end of the ferrule (2) is connected to the first end of the ferrule flange (4). Certainly, the ferrule (2) and the ferrule flange (4) may alternatively be disposed in the first outer housing (3) in another manner. This is not limited herein. In addition, the ferrule (2) is connected to the ferrule flange (4) in a plurality of manners. This is not limited herein. For example, the connection may be riveting. For example, there is a cavity opening at the first end of the ferrule flange (4), and the second end of the ferrule (2) may be plugged into the ferrule flange (4) from the cavity opening. In addition, a protrusion is provided on an inner wall of the ferrule flange (4), and the protrusion on the inner wall of the ferrule flange (4) blocks the ferrule (2) and can prevent the ferrule (2) from being completely plugged into the cavity of the ferrule flange (4).

With respect to the manner in which the second end of the ferrule flange (4) is in contact with the first end of the push handle (8) by using the second spring (6), for example, a blocking member is disposed at the second end of the ferrule flange (4), a blocking member is also disposed at the first end of the push handle (8), and the blocking member of the ferrule flange (2) and the blocking member of the push handle (8) are used to prevent the spring from being disengaged between the ferrule flange (4) and the push handle (8) when the spring is stressed. The second spring (6) can provide an elastic force for the ferrule (2) through the ferrule flange (4), to ensure that after the ferrule (2) is plugged into the adapter (200) with the connector (100), an end face of the ferrule (2) better fits in with an end face of another ferrule plugged from the other end of the adapter (200). An inner wall of the first outer housing (3) is in contact with an outer wall of the ferrule flange (4) and an outer wall of the push handle (8) to stabilize the ferrule flange (4) and the push handle (8).

It should be noted that, in a case in which components same as those in the first embodiment exist in the second embodiment, reference may be made to the related description in the first embodiment for the connection relationship of the related components in the second embodiment. For the connector, only the description of the second electrical assembly needs to be removed on a basis of the first embodiment. Disposition principles of the flexible hard pipe (9), the inner housing (7), the tail pipe (10), and the like are the same as those in the first embodiment. It may be understood that, in the second embodiment, because the second electrical assembly does not exist, the tail pipe (9) does not have a part connected to or corresponding to the second electrical assembly.

### About the adapter (200):

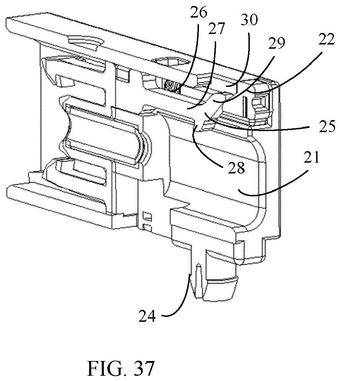

FIG. 36 is a view of the adapter (200) in one direction according to an embodiment of this application. FIG. 37 is a view of the adapter (200) in another direction according to an embodiment of this application. The adapter (200) includes a housing (20), and a first accommodating space (21) is disposed in the housing (20). As shown in FIG. 23, the first accommodating space (21) is configured to accommodate the connector (100). For example, the first accommodating space (21) forms an opening on the housing, and the first accommodating space (21) is configured to accommodate the first outer housing (3) of the connector (100) from the opening. The adapter (200) further includes a mushroom head (24), and the mushroom head (24) is configured to plug into an integrated circuit board to fasten the adapter (200). In addition, a first groove (30) is disposed on the housing (20).

In an optional solution, as shown in FIG. 37, the adapter (200) further includes a first buckle (25). The first buckle (25) is disposed in the first accommodating space (21) and is fastened to the housing (20). The first buckle (25) includes a first protrusion (28) and a second protrusion (29). The first protrusion (28) is configured to cooperate with the first slot (32) on the first outer housing (3) to fasten the adapter (200) and the connector (100). The first groove (30) is configured to provide a movable space for the second protrusion (29). The second protrusion (29) is configured to move in the first groove (30) under an external force and drive the first protrusion (28) away from the first slot (32). For example, the external force may be applied by the operating handle (22).

Optionally, the first buckle (25) is fastened to the housing (20) by using an elastic support (27). The first buckle (25) and the elastic support (27) may be two components, that is, the first buckle (25) and the elastic support (27) are independent components, and the two components are fixedly connected by means of buckle-slot cooperation, or fixedly connected by means of adhesive bonding. Alternatively, the first buckle (25) and the elastic support (27) are two parts of one component, that is, the first buckle (25) and the elastic support (27) are an integrally formed structure, where one end of the elastic support (27) is fastened on the housing, and the other end of the elastic support (27) is fastened on the first buckle (25).

The second protrusion (29) includes a slope. The slope is inclined with respect to an axial direction of the adapter. The slope is configured to cooperate with the operating handle (22). The slope is configured to convert an axial force of the operating handle (22) on the slope into a radial force, and the radial force is used to drive the first buckle (25) to move away from the first slot (32).

When the connector (100) is accommodated in the first accommodating space (21), a first end of the first protrusion (28) is plugged into the first slot (32) on the first outer housing (3) of the connector (100). When the connector (100) needs to be unlocked from the first accommodating space (21), the operating handle (22) moves toward the first buckle (25) to generate a force on the first buckle (25). Because the first buckle (25) is connected to the elastic support (27), the elastic support (27) also receives the force, and the elastic support (27) receiving force is deformed in a direction away from the first slot (32) due to action of the slope. Correspondingly, the first protrusion (28) of the first buckle (25) deviates from the first slot (32) with the elastic support (27), and the deviation of the first buckle (25) causes the second protrusion (29) to also move away from the first slot (32). Due to presence of the first groove (30), there is a sufficient space for the second protrusion (29) to deviate.

Relative positions of the operating handle (22) and the first buckle (25) are not limited herein, provided that when the operating handle (22) is pushed (or moved), the elastic support (27) can be deformed in the direction away from the first slot (32) due to an interaction force between the operating handle (22) and the first buckle (25), and the first protrusion (28) of the first buckle (25) is finally driven to deviate from the first slot (32).

The operating handle (22) is a component beyond the adapter (200), or a component on the adapter (200). When the operating handle (22) is a component on the adapter (200), the operating handle (22) can be movably connected to the housing. In this case, an optional position relationship between the operating handle (22) and the first buckle (25) is as follows: The operating handle (22) is located at one end of the adapter (200) closer to the connected connector (100), and the first buckle (25) is located at one end of the adapter (200) away from the connected connector (100). Certainly, the disposition may alternatively be as follows: The operating handle (22) is located at one end of the adapter (200) away from the connected connector (100), and the first buckle (25) is located at one end of the adapter (200) closer to the connected connector (100). Certainly, there are also other manners.

In an optional solution, the adapter (200) further includes a first spring (26). The first spring (26) is elastically connected between the housing (20) and the operating handle (22). In the process of unlocking the connector (100) and the adapter (200), the operating handle (22) moves relative to the housing (20) and compresses the first spring (26), and after unlocking, the operating handle (22) springs back to its original position under an elastic holding force of the first spring (26). As shown in FIG. 37, when the operating handle (22) is pushed to move in a direction toward the first buckle (25), the first spring (26) is compressed to accumulate a force opposite to the movement direction of the operating handle (22), and when there is no external interference on the operating handle (22), the force accumulated by the first spring (26) is released, thereby pushing the operating handle (22) to return to its original position before the movement.

It should be noted that one end of the adapter (200) is configured to plug the connector (100), and the other end of the adapter (200) is configured to plug another connector (100). The two connectors (100) both have the second spring (6) mentioned above. Therefore, when the other connector (100) is also plugged into the adapter (200), under the action of the two second springs (6) on the two connectors (100), there is a force to push the two connectors (100) out of the adapter (200). Therefore, after the first protrusion (28) of the first buckle (25) leaves the first slot (32), the connector (100) moves in a direction away from the adapter (200) under the force, and therefore is unfastened from the adapter and unlocked.

In this embodiment of this application, to ensure that the connector (100) can be plugged into the adapter (200) and properly connected to the adapter (200), and in particular, to ensure that the ferrule (2) in the connector (100) can be plugged into a corresponding slot (that is, a ferrule sleeve) in the adapter (200), an outer surface profile of the connector (100) and an inner surface profile of the adapter (200) need to be designed, so that when the connector (100) is connected to the adapter (200), the ferrule (2) of the connector (100) can be adapted to angles in correct positions for plugging into the adapter (200), that is, a guide (or guidance) design is provided. By designing a shape of the first accommodating space (21) of the adapter (200) and the profile of the connector (100), for example, by designing an asymmetric structure using a central axis as a center, the connector (100) can be plugged into the adapter only in a determined direction in an interconnection process of the connector (100) and the adapter (200). A foolproof structure can be implemented. For ease of understanding, the following lists several optional guide (or guidance) design solutions.

Solution 1: A protrusion is provided on an inner wall of the adapter (200), a groove coupled to the groove is provided on an outer wall of the first outer housing (3), and the groove and the protrusion are configured to guide the connection between the first outer housing (3) and the adapter (200). It may be understood that after the groove and protrusion are designed, if the groove on the first outer housing (3) is not aligned with the protrusion on the adapter (200), the connector (100) cannot be plugged into the adapter (200). When the groove and the protrusion are designed, regardless of whether a profile of the inner wall of the adapter (200) and a profile of the outer wall of the connector (100) are circles, regular polygons, or other centrosymmetric shapes, no case in which the ferrule (2) cannot be adapted after the connector (100) is plugged into the adapter (200) occurs.

Solution 2: The end face of the first outer housing (3) that is close to a front end of the connector is a non-centrosymmetric structure. For example, a shape of the adapter (200) that is enclosed by the inner wall at one end close to the inserted first outer housing (3) is an asymmetric shape, or a shape with only one axis of symmetry, which may be referred to as a first shape. Correspondingly, the end face of the first outer housing (3) that is close to the front end of the connector (100) is in an asymmetric shape or a shape with only one axis of symmetry, that is, also the first shape. It may be understood that the design of the first shape enables the connector (100) to plug into the adapter (200) only at one angle. Therefore, no case in which the ferrule (2) cannot be adapted after the connector (100) is plugged into the adapter (200) occurs.

Optionally, an axial distance between the first slot (32) and a front end face of the ferrule (2) is a first size, and a radial distance between the first slot (32) and a central axis of the ferrule (2) is a second size; and an axial distance between the first protrusion (28) on the adapter (200) and a central position of a ferrule sleeve is the first size, and a radial distance between the first protrusion (28) and a central axis of the ferrule sleeve is the second size. An axial distance between the first groove (30) on the adapter (200) and the central position of the ferrule sleeve is greater than the first size.

An axial distance between the first slot (32) and a front end of the ferrule (2) is a minimum vertical distance between the first slot (32) and the front end face of the ferrule (2) along an axial direction of the ferrule. Because the first slot (32) is a three-dimensional structure, an axial distance between a position of the first slot (32) closest to the front end face of the ferrule (2) and the front end face of the ferrule (2) is "the axial distance between the first slot (32) and the front end face of the ferrule (2)".

The axial distance between the first protrusion (28) and the central position of the ferrule sleeve is a minimum vertical distance between the first protrusion (28) and the central position of the ferrule sleeve along an axial direction of the ferrule sleeve, and an axial distance between a position of the first protrusion (28) closest to the central position of the ferrule sleeve and the central position of the ferrule sleeve is "the axial distance between the first protrusion (28) and the central position of the ferrule sleeve".

In this embodiment of this application, a component formed by plugging the connector (100) into the adapter (200) may be referred to as a connector assembly, and a corresponding component, a communications device, or the like may be further assembled based on the connector assembly. Both the connector assembly and the communications device have been described above, and details are not described herein again.

In this embodiment of this application, the ferrule (2) of the connector (100) may be based on an SC standard, an LC standard, or another standard. This is not specifically limited in this application. For the ferrules (2) of different standards, a size of the first accommodating space (21) of the adapter (200) may also be different, and the difference mainly lies in adaptation of the ferrule (2). For example, the adapter (200) may be an SC-standard adapter SC BOSA or an LC-standard adapter LC BOSA.

In this embodiment of this application, the first outer housing is designed to wrap the ferrule, the ferrule flange, and the second electrical assembly. In comparison with a conventional method of first wrapping the ferrule and the ferrule flange by using a white frame sleeve, and then wrapping the white frame sleeve and the second electrical assembly by using the first outer housing, a radial size of the connector (100) is significantly reduced, and more connection ports can be arranged within a limited space of the communications device. In addition, because the electrical assembly is designed to be on the inner side of the first outer housing, in a process of mounting, transportation, and plugging into or unplugging from the adapter (200), human contact with the electrical assembly can be prevented, and risks of an electric shock and a short circuit can be avoided.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An adapter, comprising a housing and a first buckle, wherein
a first accommodating space is disposed in the housing, the first accommodating space forms an opening on the housing, a first groove is disposed on the housing, and the first accommodating space is configured to accommodate a first outer housing of a connector from the opening; the first buckle is disposed in the first accommodating space and fastened to the housing, the first buckle comprises a first protrusion and a second protrusion, and the first protrusion is configured to cooperate with a first slot on the first outer housing to fasten the adapter and the connector; and the first groove is configured to provide a movable space for the second protrusion, and the second protrusion is configured to move in the first groove under an external force and drive the first protrusion away from the first slot.

2. The adapter according to claim 1, wherein the first buckle is fastened to the housing by using an elastic support, one end of the elastic support is fastened to the housing, and the other end of the elastic support is fastened to the first buckle.

3. The adapter according to claim 1 or 2, wherein the second protrusion comprises a slope, the slope is inclined with respect to an axial direction of the adapter, the slope is configured to cooperate with an operating handle, the slope is configured to convert an axial force of the operating handle on the slope into a radial force, and the radial force is used to drive the first buckle to move away from the first slot.

4. The adapter according to any one of claims 1 to 3, wherein the operating handle is movably connected to the housing.

5. The adapter according to claim 4, wherein the adapter further comprises a first spring, the first spring is elastically connected between the housing and the operating handle, the operating handle moves relative to the housing and compresses the first spring in a process of unlocking the connector and the adapter, and after unlocking, the operating handle springs back to an original position under an elastic holding force of the first spring.

6. The adapter according to any one of claims 1 to 5, wherein in the adapter, an area that matches a profile of the connector is a non-centrosymmetric structure, and the non-centrosymmetric structure is used to provide a guide in a process of plugging the connector into the adapter.

7. The adapter according to any one of claims 1 to 6, wherein the adapter is a photoelectric adapter, the connector is a photoelectric connector, and the photoelectric adapter further comprises a first electrical assembly, wherein
a first end of the first electrical assembly is located in the first accommodating space, and is configured to electrically connect to a second electrical assembly in the first outer housing of the photoelectric connector; and
a second end of the first electrical assembly is located on an outer surface of the photoelectric adapter, and is configured to electrically connect to an integrated circuit board.

8. The adapter according to claim 7, wherein
the first electrical assembly comprises a first conducting element and a second conducting element; one end of the first conducting element, being a part of the first end, is configured to plug into the first outer housing of the photoelectric connector and electrically connect to a third conducting element in the second electrical assembly; the other end of the first conducting element, being a part of the second end and extending out of the outer surface of the photoelectric adapter, is configured to electrically connect to the integrated circuit board; one end of the second conducting element, being a part of the first end, is configured to plug into the first outer housing and electrically connect to a fourth conducting element in the second electrical assembly; and the other end of the second conducting element, being a part of the second end and extending out of the outer surface of the photoelectric adapter, is configured to electrically connect to the integrated circuit board.

9. A connector, comprising a ferrule and a first outer housing, wherein
the ferrule is partially or completely accommodated in a cavity of the first outer housing, a first slot is disposed on an outer wall of the first outer housing, and the first slot is configured to cooperate with the first protrusion on the first buckle of the adapter according to any one of claims 1 to 8, to fasten the connector to the adapter.

10. The connector according to claim 9, wherein an axial distance between the first slot and a front end face of the ferrule is a first size, and a radial distance between the first slot and a central axis of the ferrule is a second size; and an axial distance between the first protrusion on the adapter and a central position of a ferrule sleeve is the first size, and a radial distance between the first protrusion and a central axis of the ferrule sleeve is the second size.

11. The connector according to claim 9 or 10, wherein the connector is specifically a photoelectric connector, the photoelectric connector further comprises a second electrical assembly, and the second electrical assembly is located on an inner side of the first outer housing.

12. The connector according to any one of claims 9 to 11, wherein an end face of the first outer housing close to a plug of the photoelectric connector is a non-centrosymmetric structure.

13. The connector according to any one of claims 9 to 12, further comprising:
a tail pipe;
a flexible hard pipe, wherein an internal cavity of the flexible hard pipe is used for returning of a fiber in a photoelectric hybrid cable, and the flexible hard pipe is located in the tail pipe; and
a push handle, wherein a first end of the push handle is located in the first outer housing, and a second end of the push handle is located in the tail pipe.

14. The connector according to claim 13, wherein a first end of the flexible hard pipe is connected to the second end of the push handle or plugged into the push handle from the second end of the push handle.

15. The connector according to claim 13 or 14, further comprising an inner housing, wherein
the inner housing encloses the flexible hard pipe and the push handle.

16. The connector according to claim 15, wherein the tail pipe encloses the push handle, the inner housing, the flexible hard pipe, and the photoelectric hybrid cable.

17. The connector according to any one of claims 9 to 16, wherein the second electrical assembly comprises an insulating terminal block, the insulating terminal block is disposed between two conducting elements, a third protrusion for preventing relative moving of the insulating terminal block and the two conducting elements is disposed on the conducting element, and a fourth protrusion for buckling the first outer housing is disposed on the insulating terminal block.

18. The connector according to any one of claims 9 to 17, wherein the second electrical assembly comprises a third conducting element and a fourth conducting element, both a first end of the third conducting element and a first end of the fourth conducting element are located on the inner side of the first outer housing, the first end of the third conducting element and the first end of the fourth conducting element are respectively configured to connect to a first conducting element and a second conducting element in a photoelectric adapter, and a second end of the third conducting element and a second end of the fourth conducting element are respectively electrically connected to two wires in the photoelectric hybrid cable.

19. The connector according to any one of claims 9 to 18, wherein
a first part of the ferrule and a first part of the second electrical assembly are located in a one space; and
the first part of the ferrule is a part of the ferrule that is in the first outer housing and close to a plug of the photoelectric connector, and the first part of the second electrical assembly is a part of the second electrical assembly that is in the first outer housing and close to the plug of the photoelectric connector.

20. The connector according to any one of claims 9 to 19, wherein
the first part of the ferrule and the first part of the second electrical assembly are respectively located in two separate spaces; and
the first part of the ferrule is a part of the ferrule that is in the first outer housing and close to the plug of the photoelectric connector, and the first part of the second electrical assembly is a part of the second electrical assembly that is in the first outer housing and close to the plug of the photoelectric connector.

21. The connector according to any one of claims 9 to 20, further comprising a ferrule flange and a second spring, wherein
the ferrule is connected to a first end of the ferrule flange in the first outer housing; and
a second end of the ferrule flange is in contact with the first end of the push handle by using the second spring.

22. A photoelectric connector, comprising a ferrule, a first outer housing, and a second electrical assembly, wherein the first outer housing comprises a front end face, a rear end face, and an inner side face and an outer surface that connect the front end face and the rear end face, the inner side face encloses a cavity, the ferrule is partially or completely located in the cavity, the second electrical assembly is partially or completely located in the cavity, the front end face encloses a first socket and a second socket, the first socket is disposed correspondingly with the ferrule, and the second socket is disposed correspondingly with the second electrical assembly.

23. The photoelectric connector according to claim 22, wherein
the first socket is connected to the second socket; or
the first socket and the second socket are independent of each other.

24. The photoelectric connector according to claim 22 or 23, wherein the ferrule extends out of the first outer housing from the first socket, and the second electrical assembly does not extend out of the first outer housing from the second socket.

25. The photoelectric connector according to any one of claims 22 to 24, wherein the front end face of the first outer housing that is close to a plug of the photoelectric connector is in an asymmetric shape or a shape with only one axis of symmetry.

26. The photoelectric connector according to any one of claims 22 to 25, further comprising:
a tail pipe;
a flexible hard pipe, wherein an internal cavity of the flexible hard pipe is used for returning of a fiber in a photoelectric hybrid cable, and the flexible hard pipe is located in the tail pipe; and
a push handle, wherein a first end of the push handle is located in the first outer housing, and a second end of the push handle is located in the tail pipe.

27. The photoelectric connector according to claim 26, wherein a first end of the flexible hard pipe is connected to the second end of the push handle or plugged into the push handle from the second end of the push handle.

28. The photoelectric connector according to claim 26 or 27, further comprising an inner housing, wherein
the inner housing encloses the flexible hard pipe and the push handle.

29. The photoelectric connector according to claim 28, wherein the tail pipe encloses the push handle, the inner housing, the flexible hard pipe, and the photoelectric hybrid cable.

30. The photoelectric connector according to any one of claims 22 to 29, wherein the second electrical assembly comprises an insulating terminal block, the insulating terminal block is disposed between two conducting elements, a third protrusion for preventing relative moving of the insulating terminal block and the two conducting elements is disposed on the conducting element, and a fourth protrusion for buckling the first outer housing is disposed on the insulating terminal block.

31. The photoelectric connector according to any one of claims 22 to 30, wherein the second electrical assembly comprises a third conducting element and a fourth conducting element, both a first end of the third conducting element and a first end of the fourth conducting element are located on an inner side of the first outer housing, the first end of the third conducting element and the first end of the fourth conducting element are respectively configured to connect to a first conducting element and a second conducting element in a photoelectric adapter, and a second end of the third conducting element and a second end of the fourth conducting element are respectively electrically connected to two wires in the photoelectric hybrid cable.

32. The photoelectric connector according to any one of claims 22 to 31, further comprising a ferrule flange and a second spring, wherein
the ferrule is connected to a first end of the ferrule flange in the first outer housing; and
a second end of the ferrule flange is in contact with the first end of the push handle by using the second spring.

33. The photoelectric connector according to any one of claims 22 to 32, wherein a first slot is disposed on an outer wall of the first outer housing, and the first slot is configured to cooperate with a first protrusion on a first buckle of the adapter to fasten the photoelectric connector to the adapter.

34. The photoelectric connector according to claim 33, wherein an axial distance between the first slot and a front end face of the ferrule is a first size, and a radial distance between the first slot and a central axis of the ferrule is a second size; and an axial distance between the first protrusion on the adapter and a central position of a ferrule sleeve is the first size, an axial distance between a first groove on the adapter and the central position of the ferrule sleeve is the first size, and a radial distance between the first protrusion and a central axis of the ferrule sleeve is the second size.
